(19) Europäisches Patentamt
European Patent Office
Office européen des brevets

(11) EP 4 715 011 A1

(12) **EUROPEAN PATENT APPLICATION**
published in accordance with Art. 153(4) EPC

(43) Date of publication:
**25.03.2026 Bulletin 2026/13**

(21) Application number: **24807190.4**

(22) Date of filing: **13.05.2024**

(51) International Patent Classification (IPC):
***C08L 69/00*** *(2006.01)*

(52) Cooperative Patent Classification (CPC):
**C08L 69/00**

(86) International application number:
**PCT/JP2024/017657**

(87) International publication number:
**WO 2024/237238 (21.11.2024 Gazette 2024/47)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **18.05.2023 JP 2023082596**

(71) Applicant: **MITSUBISHI GAS CHEMICAL COMPANY, INC.**
**Chiyoda-ku**
**Tokyo 100-8324 (JP)**

(72) Inventors:
- **KATO Noriyuki**
**Tokyo 100-8324 (JP)**
- **NISHIMORI Katsushi**
**Tokyo 125-8601 (JP)**
- **MOTEGI Atsushi**
**Tokyo 125-8601 (JP)**
- **ISHIHARA Kentaro**
**Tokyo 100-8324 (JP)**
- **OCHI Noriaki**
**Tokyo 125-8601 (JP)**
- **MATSUMOTO Mutsumi**
**Tokyo 125-8601 (JP)**
- **SATO Atsuhiro**
**Tokyo 125-8601 (JP)**

(74) Representative: **Hoffmann Eitle**
**Patent- und Rechtsanwälte PartmbB**
**Arabellastraße 30**
**81925 München (DE)**

(54) **THERMOPLASTIC RESIN COMPOSITION PRODUCTION METHOD AND THERMOPLASTIC RESIN COMPOSITION**

(57) The present invention provides a thermoplastic resin composition production method with which it is possible to reliably produce a thermoplastic resin composition having desired properties, as well as facilitate thermoplastic resin recycling and reduce the environmental load. The problem is solved by the following thermoplastic resin composition production method. Specifically provided is a thermoplastic resin composition production method at least including a mixing step for mixing a first thermoplastic resin that includes a structural unit (A) derived from a monomer represented by any one of general formulas (1a) - (1c), and a second thermoplastic resin that includes a structural unit (B) derived from a monomer represented by general formula (2), wherein the refractive index of the first thermoplastic resin is 1.650 or less, the refractive index of the second thermoplastic resin is 1.570 or more, and the refractive index of the thermoplastic resin composition is 1.550-1.700.

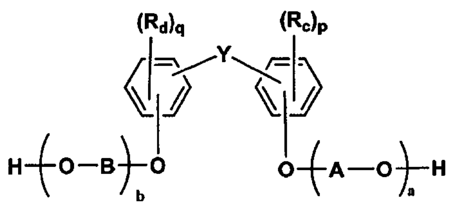

(1 a)

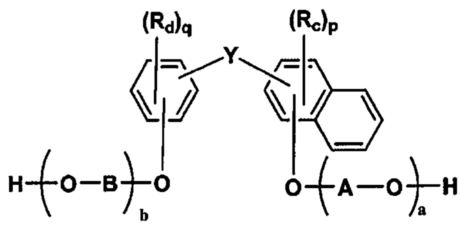

(1 b)





(Cont. next page)

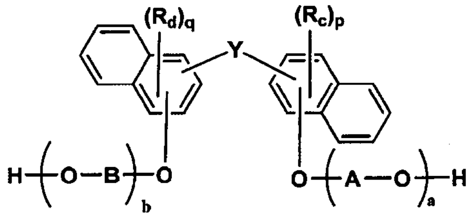

(1 c)

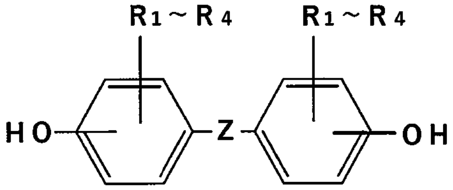

(2)

## Description

### TECHNICAL FIELD

The present invention relates to a method for producing a thermoplastic resin composition including a thermoplastic resin such as a polycarbonate, etc., and in particular, relates to a method for producing a thermoplastic resin composition including a mixture of a plurality of types of thermoplastic resins, etc.

### BACKGROUND ART

Thermoplastic resins used as optical materials are conventionally known (for example, see Patent Documents 1 and 2). Thermoplastic resins for optical applications are usually required to have good characteristics (e.g., refractive index and Abbe number).

Further, thermoplastic resins are usually molded and processed into products such as lenses and optical films through a molding process such as injection molding.

### PRIOR ART DOCUMENTS

### PATENT DOCUMENTS

Patent Document 1: International Publication WO2014/073496 pamphlet
Patent Document 2: International Publication WO2015/166951 pamphlet

### SUMMARY OF THE INVENTION

### PROBLEMS TO BE SOLVED BY THE INVENTION

It cannot be necessarily said that conventional thermoplastic resins, for example, thermoplastic resins mainly used for optical applications, have characteristics appropriate for the intended use. For example, in optical applications, a thermoplastic resin having a high refractive index is usually desired, but in many cases, productization is not easily realized only by a high refractive index material. As a specific example of such cases, in a lens unit in which no high refractive index material is used or lenses with different refractive indexes are used in combination, a medium/low refractive index material having a medium or low refractive index may also be required.

Further, it is not easy to produce only molded products by molding and processing such as injection molding of thermoplastic resins, and usually, in addition to molded products, scrap pieces are also generated due to injection of thermoplastic resins into gaps of molds such as sprues, runners, and gates. Such scrap pieces cannot be easily recycled and therefore are often discarded as wastes. For this reason, it can be said that the problem that the yield rates of conventional molded products made from thermoplastic resins do not reach a sufficient level may arise, and reduction in the environmental load in the process of molding thermoplastic resins and expansion of recycling are required.

### MEANS FOR SOLVING THE PROBLEMS

The present inventors diligently made researches in order to solve the above-described problems and found that a method for producing a thermoplastic resin composition in which a plurality of predetermined types of thermoplastic resins are mixed can reliably achieve desired characteristics mainly for optical applications, and can facilitate recycling of thermoplastic resins, thereby reducing the environmental load.

The present invention includes the following:

[1] A method for producing a thermoplastic resin composition, the method comprising at least a mixing step for mixing

a first thermoplastic resin that comprises a structural unit (A) derived from a monomer represented by any one of general formulae (1a) to (1c), and
a second thermoplastic resin that comprises a structural unit (B) derived from a monomer represented by general formula (2), wherein
the refractive index of the first thermoplastic resin is 1.650 or less,
the refractive index of the second thermoplastic resin is 1.570 or more, and

the refractive index of the thermoplastic resin composition is 1.550 to 1.700:

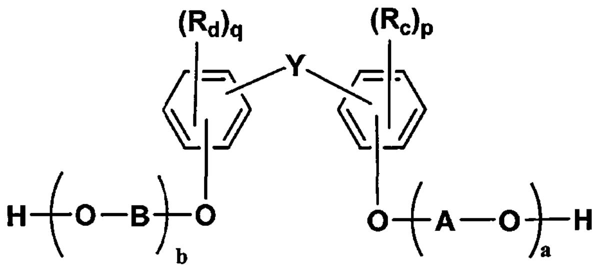

(1 a)

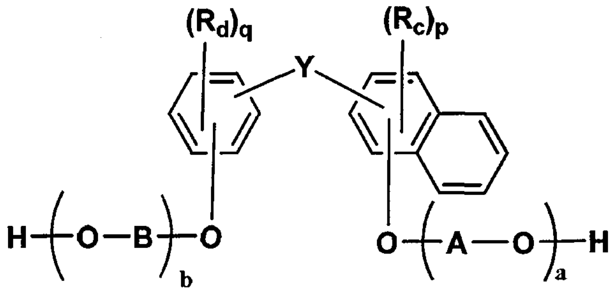

(1 b)

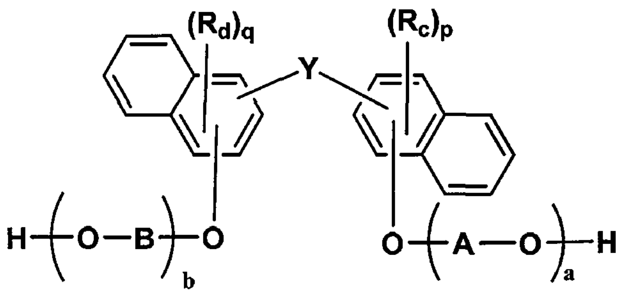

(1 c)

wherein in general formulae (1a) to (1c):

$R_c$ and $R_d$ are each independently selected from the group consisting of a hydrogen atom, a halogen atom, a substituted or unsubstituted alkyl group having 1 to 20 carbon atoms, a substituted or unsubstituted alkoxyl group having 1 to 20 carbon atoms, a substituted or unsubstituted cycloalkyl group having 5 to 20 carbon atoms, a substituted or unsubstituted cycloalkoxyl group having 5 to 20 carbon atoms, and a substituted or unsubstituted aryl group having 6 to 20 carbon atoms;

each Y independently represents any one of a single bond, a substituted or unsubstituted fluorene group, and structural formulae represented by formulae (i) to (vii):

| | | | | | |
|---|---|---|---|---|---|
| 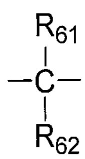 | $-S-$ | 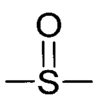 | 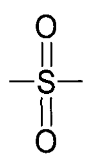 | $-(CH_2)_r-$ | $-O-$ |
| (i) | (ii) | (iii) | (iv) | (v) | (vi) |

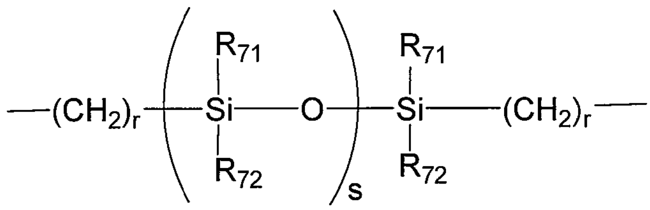

(vii)

wherein in formulae (i) to (vii):

$R_{61}$, $R_{62}$, $R_{71}$ and $R_{72}$ each independently represent a hydrogen atom, a halogen atom, a substituted or unsubstituted alkyl group having 1 to 20 carbon atoms, or a substituted or unsubstituted aryl group having 6 to 30 carbon atoms, or represent a substituted or unsubstituted carbocyclic ring or heterocyclic ring having 4 to 20 carbon atoms, wherein $R_{61}$ and $R_{62}$, or $R_{71}$ and $R_{72}$, are bonded to each other, and r and s each independently represent an integer of 0 to 5000;
A and B each independently represent a substituted or unsubstituted alkylene group having 1 to 5 carbon atoms;
p and q each independently represent an integer of 0 to 4; and
a and b each independently represent an integer of 0 to 10,

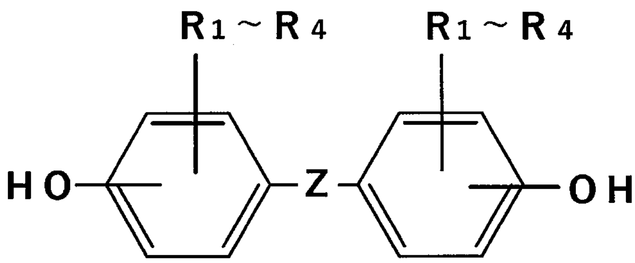

(2)

wherein in formula (2), $R_1$ to $R_4$ each independently represent a hydrogen atom, a substituted or unsubstituted alkyl group, or a substituted or unsubstituted aryl group; and Z represents a single bond or a group represented by general formula (3):

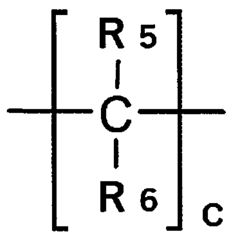

(3)

wherein in formula (3), $R_5$ and $R_6$ each independently represent a hydrogen atom, a substituted or unsubstituted alkyl group, or a substituted or unsubstituted aryl group, or represent a substituted or unsubstituted carbocyclic ring or heterocyclic ring having 4 to 20 carbon atoms, wherein $R_5$ and $R_6$ are bonded to each other, and
c represents an integer of 1 to 3.

[2] The thermoplastic resin composition production method according to item [1], wherein at least one of the first thermoplastic resin and the second thermoplastic resin comprises a recycled thermoplastic resin.
[3] The thermoplastic resin composition production method according to item [1], wherein the refractive index of the thermoplastic resin composition is 1.570 to 1.650.
[4] The thermoplastic resin composition production method according to item [1], wherein the content of the structural unit (A) is 20 to 90 mol% and the content of the structural unit (B) is 10 to 80 mol% based on the total number of structural units of the first thermoplastic resin and the second thermoplastic resin.
[5] The thermoplastic resin composition production method according to item [1], wherein at least one of the first

thermoplastic resin and the second thermoplastic resin is a copolymer having both the structural unit (A) and the structural unit (B).

[6] The thermoplastic resin composition production method according to item [1], wherein the first thermoplastic resin has only the structural unit (A).

[7] The thermoplastic resin composition production method according to item [1], wherein in the mixing step, an additive is mixed with the first thermoplastic resin and the second thermoplastic resin.

[8] A thermoplastic resin composition comprising a mixture of

a first thermoplastic resin that comprises a structural unit (A) derived from a monomer represented by any one of general formulae (1a) to (1c), and
a second thermoplastic resin that comprises a structural unit (B) derived from a monomer represented by general formula (2), wherein
the refractive index of the first thermoplastic resin is 1.650 or less,
the refractive index of the second thermoplastic resin is 1.570 or more, and
the refractive index of the thermoplastic resin composition is 1.550 to 1.700:

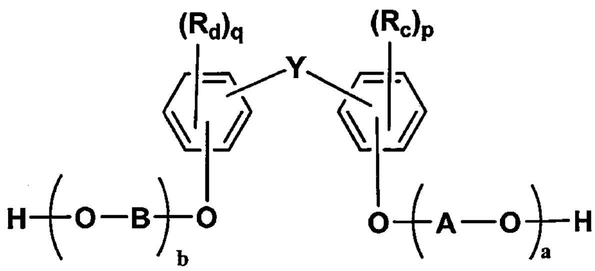
(1 a)

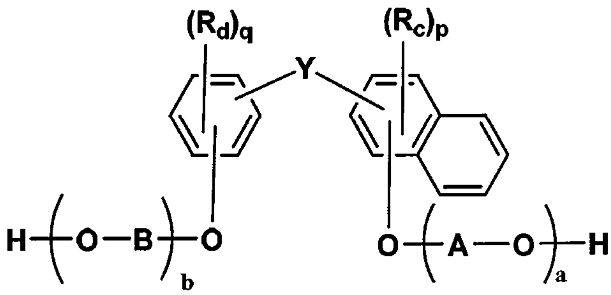
(1 b)

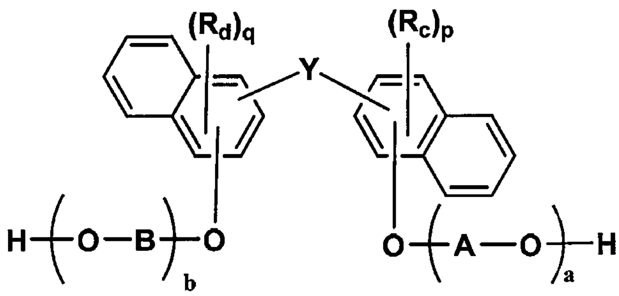
(1 c)

wherein in general formulae (1a) to (1c):

$R_c$ and $R_d$ are each independently selected from the group consisting of a hydrogen atom, a halogen atom, a substituted or unsubstituted alkyl group having 1 to 20 carbon atoms, a substituted or unsubstituted alkoxyl group having 1 to 20 carbon atoms, a substituted or unsubstituted cycloalkyl group having 5 to 20 carbon atoms, a substituted or unsubstituted cycloalkoxyl group having 5 to 20 carbon atoms, and a substituted or unsubstituted aryl group having 6 to 20 carbon atoms;
each Y independently represents any one of a single bond, a substituted or unsubstituted fluorene group, and structural formulae represented by formulae (i) to (vii):

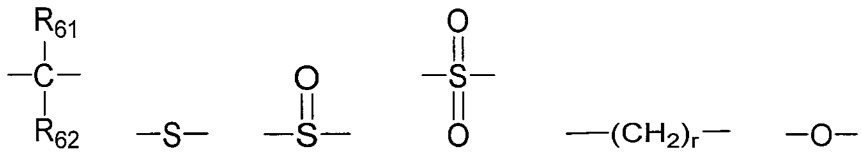

(i) (ii) (iii) (iv) (v) (vi)

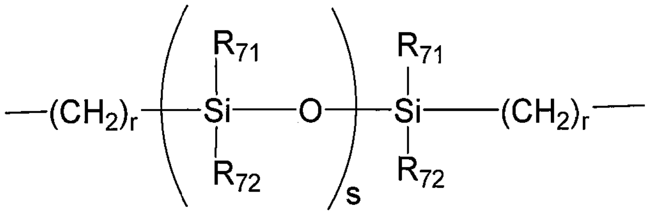

(vii)

wherein in formulae (i) to (vii):

$R_{61}$, $R_{62}$, $R_{71}$ and $R_{72}$ each independently represent a hydrogen atom, a halogen atom, a substituted or unsubstituted alkyl group having 1 to 20 carbon atoms, or a substituted or unsubstituted aryl group having 6 to 30 carbon atoms, or represent a substituted or unsubstituted carbocyclic ring or heterocyclic ring having 4 to 20 carbon atoms, wherein $R_{61}$ and $R_{62}$, or $R_{71}$ and $R_{72}$, are bonded to each other, and r and s each independently represent an integer of 0 to 5000;
A and B each independently represent a substituted or unsubstituted alkylene group having 1 to 5 carbon atoms;
p and q each independently represent an integer of 0 to 4; and
a and b each independently represent an integer of 0 to 10,

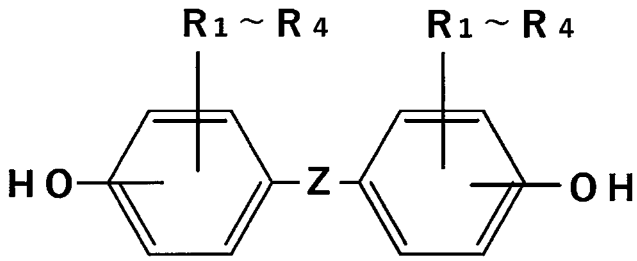

(2)

wherein in formula (2), $R_1$ to $R_4$ each independently represent a hydrogen atom, an alkyl group, or an aryl group; and
Z represents a single bond or a group represented by general formula (3):

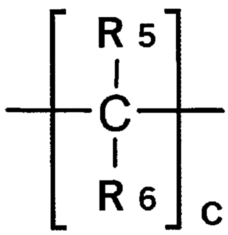

(3)

wherein in formula (3), $R_5$ and $R_6$ each independently represent a hydrogen atom, a substituted or unsubstituted alkyl group, or a substituted or unsubstituted aryl group, or represent a substituted or unsubstituted carbocyclic ring or heterocyclic ring having 4 to 20 carbon atoms, wherein $R_5$ and $R_6$ are bonded to each other, and
c, which is not a carbon atom, represents an integer of 1 to 3.

[9] The thermoplastic resin composition according to item [8], wherein the thermoplastic resins comprise a mold release agent and/or an antioxidant.

[10] An optical lens comprising the thermoplastic resin composition according to item [8] or [9].

ADVANTAGEOUS EFFECT OF THE INVENTION

According to the present invention, a thermoplastic resin composition having desired properties, particularly for optical applications, can be reliably realized by mixing a plurality of predetermined types of thermoplastic resins. Further, in the thermoplastic resin composition production method of the present invention, a thermoplastic resin can be easily recycled, and expansion of recycling and reduction in the environmental load can also be realized.

DESCRIPTION OF EMBODIMENTS

1. Components of Thermoplastic Resin Composition to be Produced

1-1. Thermoplastic Resin Composition

The method for producing the thermoplastic resin composition of the present invention includes at least a mixing step for mixing a first thermoplastic resin that includes a structural unit (A) derived from a monomer represented by any one of general formulae (1a) to (1c) above and a second thermoplastic resin that includes a structural unit (B) derived from a monomer represented by general formula (2) above. Details of the first and second thermoplastic resins will be described later, but the structural unit (A) included in the first thermoplastic resin may be, for example, a fluorene-based structural unit having a fluorene ring. Further, the structural unit (B) included in the second thermoplastic resin may be, for example, a bisphenol-based structural unit derived from a bisphenol-based compound.

In the method for producing the thermoplastic resin composition of the present invention, the first thermoplastic resin and the second thermoplastic resin are used as a mixture. Therefore, in the method for producing the thermoplastic resin composition, recycled products such as small pieces of resins that are difficult to reuse can be easily utilized. Accordingly, at least one of the first thermoplastic resin and the second thermoplastic resin may include a recycled product, and at least one of the first thermoplastic resin and the second thermoplastic resin may consist of only a recycled product. Further, both the first thermoplastic resin and the second thermoplastic resin may consist of only a recycled product.

The recycled product refers to a thermoplastic resin that has been molded at least once to have a predetermined shape and is then made into a raw material not having a predetermined shape again, and the like. Furthermore, scrap pieces other than molded products that are generated in the processing of a thermoplastic resin to produce molded products having a predetermined shape are also included in the recycled product.

In the thermoplastic resin composition, preferably, at least one of the first thermoplastic resin and the second thermoplastic resin is a copolymer including both the structural unit (A) and the structural unit (B). Further, in the thermoplastic resin composition, both the first thermoplastic resin and the second thermoplastic resin may be a copolymer including both the structural unit (A) and the structural unit (B).

In the thermoplastic resin composition, preferably, the content of the structural unit (A) is 20 to 95 mol% and the content of the structural unit (B) is 5 to 80 mol% based on the total number of structural units, i.e., the total number of moles, of the first thermoplastic resin and the second thermoplastic resin.

Based on the total number of moles of the first thermoplastic resin and the second thermoplastic resin, the content of the structural unit (A) is preferably 25 to 95 mol% or 25 to 90 mol%, more preferably 30 to 95 mol% or 30 to 90 mol%, even more preferably 40 to 90 mol%, 45 to 90 mol%, 40 to 85 mol% or 45 to 85 mol%, and particularly preferably 55 to 85 mol%, 60 to 85 mol%, 60 to 80 mol% or 65 to 80 mol%.

Further, based on the total number of moles of the structural units of the thermoplastic resin composition, i.e., the total number of moles of all the structural units of the resins included in the thermoplastic resin composition, the content of the structural unit (A) is preferably 25 to 95 mol% or 25 to 90 mol%, more preferably 30 to 95 mol% or 30 to 90 mol%, even more preferably 40 to 90 mol%, 45 to 90 mol%, 40 to 85 mol% or 45 to 85 mol%, and particularly preferably 55 to 85 mol%, 60 to 85 mol%, 60 to 80 mol% or 65 to 80 mol%.

Based on the total number of moles of the first thermoplastic resin and the second thermoplastic resin, the content of the structural unit (B) is preferably 5 to 75 mol% or 5 to 70 mol%, more preferably 5 to 60 mol% or 10 to 60 mol%, even more preferably 10 to 55 mol%, 10 to 50 mol%, 15 to 50 mol% or 15 to 45 mol%, and particularly preferably 15 to 35 mol%, 15 to 30 mol%, 20 to 35 mol% or 20 to 30 mol%.

Further, based on the total number of moles of the structural units of the thermoplastic resin composition, i.e., the total number of moles of all the structural units of the resins included in the thermoplastic resin composition, the content of the structural unit (B) is preferably 5 to 75 mol% or 5 to 70 mol%, more preferably 5 to 60 mol% or 10 to 60 mol%, even more preferably 10 to 55 mol%, 10 to 50 mol%, 15 to 50 mol% or 15 to 45 mol%, and particularly preferably 15 to 35 mol%, 15 to

30 mol%, 20 to 35 mol% or 20 to 30 mol%.

In the thermoplastic resin composition, based on the total weight of all the thermoplastic resins, the content of the first thermoplastic resin including the structural unit (A) is preferably 5 to 95% by weight, 5 to 85% by weight or 10 to 80% by weight, more preferably 15 to 70% by weight or 20 to 65% by weight, and even more preferably 30 to 70% by weight, 30 to 65% by weight, 35 to 70% by weight or 35 to 65% by weight.

Further, in the thermoplastic resin composition, based on the total weight of all the thermoplastic resins, the content of the second thermoplastic resin including the structural unit (B) is preferably 5 to 95% by weight, 10 to 90% by weight or 15 to 85% by weight, more preferably 20 to 75% by weight or 20 to 70% by weight, and even more preferably 35 to 75% by weight, 35 to 70% by weight, 40 to 75% by weight or 40 to 70% by weight. Regarding thermoplastic resins having both the structural unit (A) and the structural unit (B), a thermoplastic resin in which the number of moles of the structural unit (A) is larger than that of the structural unit (B) is taken as the first thermoplastic resin, and a thermoplastic resin in which the number of moles of the structural unit (B) is larger than that of the structural unit (A) is taken as the second thermoplastic resin.

In the thermoplastic resin composition, based on the total weight of all the thermoplastic resins, the total content of the first thermoplastic resin including the structural unit (A) and the second thermoplastic resin including the structural unit (B) is preferably 40% by weight or more, more preferably 50% by weight or more or 60% by weight or more, even more preferably 70% by weight or more or 80% by weight or more, and particularly preferably 90% by weight or more or 95% by weight or more. Particularly preferably, all the thermoplastic resins included in the thermoplastic resin composition are substantially the first thermoplastic resin or the second thermoplastic resin.

In the thermoplastic resin composition, based on the total weight thereof, the total content of the first thermoplastic resin including the structural unit (A) and the second thermoplastic resin including the structural unit (B) is preferably 40% by weight or more, more preferably 50% by weight or more or 60% by weight or more, even more preferably 70% by weight or more or 80% by weight or more, and particularly preferably 90% by weight or more or 95% by weight or more.

Thus, the thermoplastic resin composition may include a component other than the first and second thermoplastic resins. For example, the thermoplastic resin composition may include a thermoplastic resin other than the first and second thermoplastic resins, an additive, etc., the details of which will be described later.

The type of the thermoplastic resins included in the thermoplastic resin composition is not particularly limited, but is preferably a polycarbonate resin, a polyester resin, or a polyester carbonate resin, and more preferably a polycarbonate resin. The thermoplastic resins included in the thermoplastic resin composition may have a structure of a random copolymer, a block copolymer, or an alternating copolymer, or may be a homopolymer.

1-2. First Thermoplastic Resin

The first thermoplastic resin includes at least a structural unit (A) derived from a monomer represented by any one of general formulae (1a) to (1c).

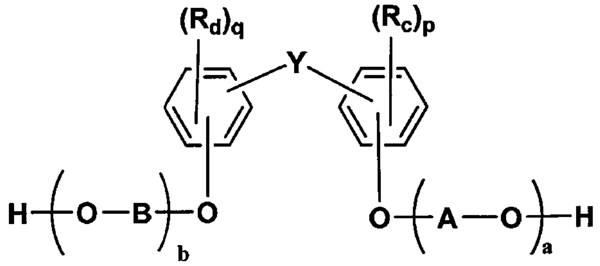

(1 a)

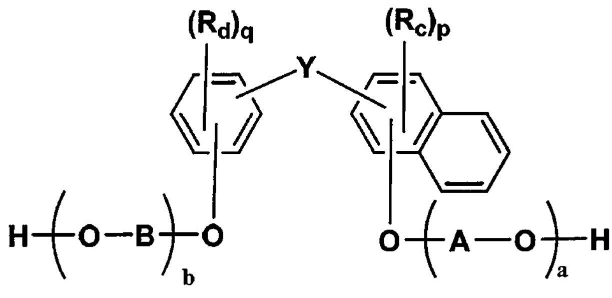

(1 b)

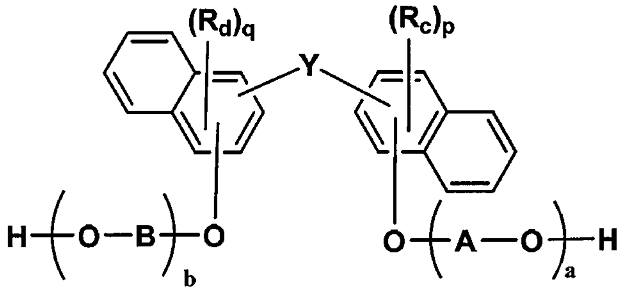

(1 c)

In general formulae (1a) to (1c), $R_c$ and $R_d$ are each independently selected from the group consisting of a hydrogen atom, a halogen atom, a substituted or unsubstituted alkyl group having 1 to 20 carbon atoms, a substituted or unsubstituted alkoxyl group having 1 to 20 carbon atoms, a substituted or unsubstituted cycloalkyl group having 5 to 20 carbon atoms, a substituted or unsubstituted cycloalkoxyl group having 5 to 20 carbon atoms, and a substituted or unsubstituted aryl group having 6 to 20 carbon atoms.

$R_c$ and $R_d$ in general formulae (1a) to (1c) are preferably each independently selected from a hydrogen atom, a substituted or unsubstituted alkyl group having 1 to 20 carbon atoms, a substituted or unsubstituted alkoxyl group having 1 to 20 carbon atoms, a substituted or unsubstituted cycloalkyl group having 5 to 20 carbon atoms, and a substituted or unsubstituted aryl group having 6 to 20 carbon atoms, and more preferably each independently selected from a hydrogen atom, a substituted or unsubstituted alkyl group having 1 to 20 carbon atoms, and a substituted or unsubstituted aryl group having 6 to 20 carbon atoms. Even more preferably, $R_c$ and $R_d$ are selected from a hydrogen atom and a substituted or unsubstituted aryl group having 6 to 20 carbon atoms.

In general formulae (1a) to (1c), A and B each independently represent a substituted or unsubstituted alkylene group having 1 to 5 carbon atoms, preferably a substituted or unsubstituted alkylene group having 1 to 3 carbon atoms, and more preferably a substituted or unsubstituted alkylene group having 1 or 2 carbon atoms.

In general formulae (1a) to (1c), p and q each independently represent an integer of 0 to 4, preferably an integer of 0 to 3, and more preferably 0 or 1.

Further, in general formulae (1a) to (1c), a and b each independently represent an integer of 0 to 10, preferably an integer of 0 to 5, more preferably an integer of 0 to 3, and particularly preferably 0 or 1.

Among the options for $R_c$ and $R_d$ in general formulae (1a) to (1c), each of the substituted or unsubstituted alkyl group having 1 to 20 carbon atoms and the substituted or unsubstituted alkoxyl group having 1 to 20 carbon atoms has a carbon number of preferably 1 to 10, more preferably 1 to 6, and even more preferably 1 to 3, or 1.

Among the options for $R_c$ and $R_d$ in general formulae (1a) to (1c), each of the substituted or unsubstituted cycloalkyl group having 5 to 20 carbon atoms and the substituted or unsubstituted cycloalkoxyl group having 5 to 20 carbon atoms has a carbon number of preferably 5 to 10, more preferably 6 to 8, and even more preferably 6 or 7.

Among the options for $R_c$ and $R_d$ in general formulae (1a) to (1c), the substituted or unsubstituted aryl group having 6 to 20 carbon atoms has a carbon number of preferably 6 to 12, more preferably 6 to 10, and even more preferably 6 to 8, or 6.

In general formulae (1a) to (1c), each Y independently represents any one of a single bond, a substituted or unsubstituted fluorene group, and structural formulae represented by formulae (i) to (vii).

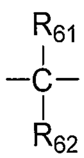

(i)

$-S-$

(ii)

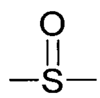

(iii)

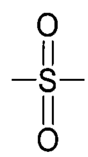

(iv)

$-(CH_2)_r-$

(v)

$-O-$

(vi)

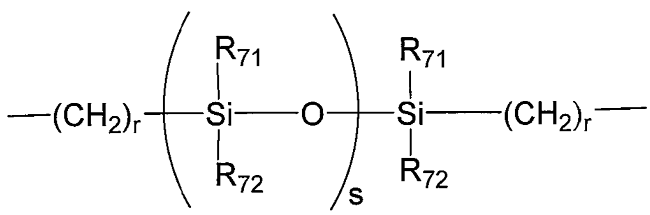

(vii)

In formulae (i) to (vii),

$R_{61}$, $R_{62}$, $R_{71}$ and $R_{72}$ each independently represent a hydrogen atom, a halogen atom, a substituted or unsubstituted alkyl group having 1 to 20 carbon atoms, or a substituted or unsubstituted aryl group having 6 to 30 carbon atoms, or represent a substituted or unsubstituted carbocyclic ring or heterocyclic ring having 4 to 20 carbon atoms, wherein $R_{61}$ and $R_{62}$, or $R_{71}$ and $R_{72}$, are bonded to each other, and
r and s each independently represent an integer of 0 to 5000.
A and B each independently represent a substituted or unsubstituted alkylene group having 1 to 5 carbon atoms;
p and q each independently represent an integer of 0 to 4; and
a and b each independently represent an integer of 0 to 10.

Among the options for $R_{61}$, $R_{62}$, $R_{71}$ and $R_{72}$, the substituted or unsubstituted alkyl group having 1 to 20 carbon atoms has a carbon number of preferably 1 to 10, more preferably 1 to 6, and even more preferably 1 to 3, or 1. Further, among the options for $R_{61}$, $R_{62}$, $R_{71}$ and $R_{72}$, the substituted or unsubstituted aryl group having 6 to 30 carbon atoms has a carbon number of preferably 6 to 20, more preferably 6 to 10, and even more preferably 6 to 8.
The substituted or unsubstituted carbocyclic ring or heterocyclic ring having 4 to 20 carbon atoms, wherein $R_{61}$ and $R_{62}$ are bonded to each other or $R_{71}$ and $R_{72}$ are bonded to each other, has a carbon number of preferably 5 to 10, and more preferably 6 to 8. Note that the carbon number of the substituted or unsubstituted carbocyclic ring or heterocyclic ring having 4 to 20 carbon atoms includes one C atom shown in formula (i).
Further, r and s are preferably 0 to 1000, for example, 0 to 500, 0 to 100, or the like.
In general formulae (1a) to (1c), A and B are preferably a substituted or unsubstituted alkylene group having 1 to 3 carbon atoms, and more preferably an alkylene group having 1 or 2 carbon atoms.

p and q are preferably an integer of 0 to 2, and more preferably 0 or 1.
a and b are preferably an integer of 0 to 5, more preferably an integer of 0 to 3, and even more preferably 0 or 1.

In general formulae (1a) to (1c), each Y independently represents preferably a single bond or a substituted or unsubstituted fluorene group, and more preferably a substituted or unsubstituted fluorene group.
Examples of the substituents that may be included in the structural unit (A) of the above-described formulae (1a) to (1c) include a halogen atom, a hydroxy group, a carboxy group, a cyano group, an amide group having 1 to 10 carbon atoms, an alkyl group having 1 to 10 carbon atoms, a cycloalkyl group having 5 to 10 carbon atoms, an alkoxy group having 1 to 10 carbon atoms, a cycloalkyloxy group having 5 to 10 carbon atoms, an alkyloxycarbonyl group having 2 to 10 carbon atoms, a cycloalkyloxycarbonyl group having 5 to 10 carbon atoms, an aryloxycarbonyl group having 7 to 15 carbon atoms, an alkylcarbonyloxy group having 2 to 10 carbon atoms, a cycloalkylcarbonyloxy group having 5 to 10 carbon atoms, an arylcarbonyloxy group having 7 to 15 carbon atoms, a hydroxyalkylcarbonyl group having 2 to 10 carbon atoms, and a glycidyloxycarbonyl group. Note that the carbon number regarding general formulae (1a) to (1c) includes the carbon number of the substituents.
Preferred specific examples of the monomer of formula (1a) above include BPEF (9,9-bis(4-(2-hydroxyethoxy)phenyl)fluorene) and BPPEF (9,9-bis(4-(2-hydroxyethoxy)-3-phenylphenyl)fluorene).

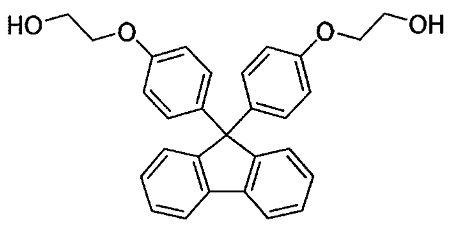

BPEF

9,9-bis(4-(2-hydroxyethoxy)phenyl)fluorene

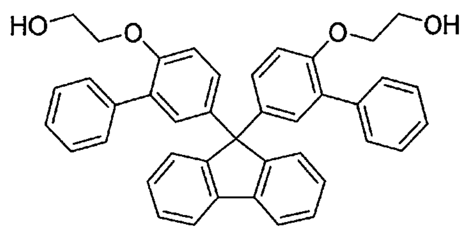

BPPEF

9,9-bis(4-(2-hydroxyethoxy)-3-phenylphenyl)fluorene

Preferred specific examples of the monomer of formula (1c) above include a fluorene compound represented by formula (1c-1) below.

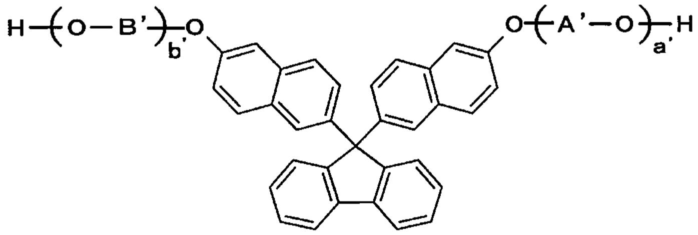

(1c-1)

A' and B' in general formula (1c-1) are respectively the same as A and B in formula (1c) above. Specifically, A' and B' in formula (1c-1) each independently represent a substituted or unsubstituted alkylene group having 1 to 5 carbon atoms, preferably a substituted or unsubstituted alkylene group having 1 to 3 carbon atoms, and more preferably a substituted or unsubstituted alkylene group having 1 or 2 carbon atoms.

Similarly, a' and b' in general formula (1c-1) are respectively the same as a and b in formula (1c) above. Specifically, a' and b' in formula (1c-1) each independently represent an integer of 0 to 10, preferably an integer of 0 to 5, more preferably an integer of 0 to 3, and particularly preferably 0 or 1.

Preferred specific examples of the monomers of formula (1c) and formula (1c-1) above include BNEF (9,9-bis(6-(2-hydroxyethoxy)naphthalen-2-yl)fluorene).

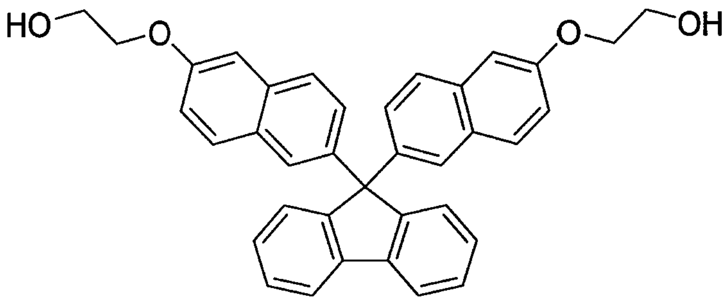

BNEF

9,9-bis(6-(2-hydroxyethoxy)naphthalen-2-yl)fluorene

Note that the monomer compounds of formulae (1a) to (1c) above may be used solely, or two or more of them may be used in combination to form the structural unit (A).

Further, the first thermoplastic resin is preferably a copolymer having the above-described structural unit (A) and the structural unit (B). In the first thermoplastic resin which is the above-described copolymer, based on the total number of moles of the structural unit (A) which may be a fluorene-based one and the structural unit (B) which may be a fluorene-based one, the content of the structural unit (A) is preferably 5 to 90 mol%, 10 to 90 mol%, or 15 to 85 mol%, more preferably 20 to 75 mol% or 20 to 70 mol%, even more preferably 35 to 75 mol%, 35 to 70 mol%, 40 to 75 mol%, or 40 to 70 mol%, and particularly preferably 45 to 65 mol%, 45 to 60 mol%, 50 to 60 mol%, or 50 to 55 mol%.

In the first thermoplastic resin, the content of the structural unit (A) in all structural units is preferably 40 mol% or more, more preferably 50 or 60 mol% or more, even more preferably 70 or 80 mol% or more, and particularly preferably 90 or 95 mol% or more.

The first thermoplastic resin may be a copolymer including both the structural unit (A) and the structural unit (B), or may be a polymer having only the structural unit (A), such as a homopolymer. In the thermoplastic resin composition, a plurality of different types of first thermoplastic resins including the above-described structural unit (A) may be included as a mixture.

1-3. Second Thermoplastic Resin

The second thermoplastic resin includes at least a structural unit (B) derived from a monomer represented by general formula (2).

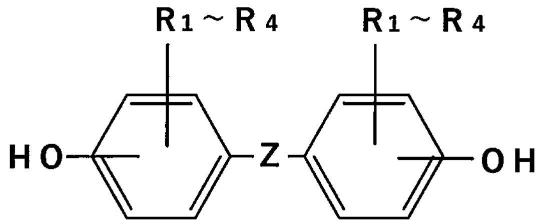

(2)

In formula (2), $R_1$ to $R_4$ each independently represent a hydrogen atom, a substituted or unsubstituted alkyl group, or a substituted or unsubstituted aryl group; and Z represents a single bond or a group represented by general formula (3).

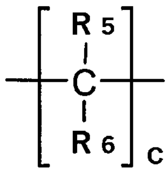

(3)

In formula (3), $R_5$ and $R_6$ each independently represent a hydrogen atom, an alkyl group, or an aryl group, or represent a substituted or unsubstituted carbocyclic ring or heterocyclic ring having 4 to 20 carbon atoms, wherein $R_5$ and $R_6$ are bonded to each other.

Further, the subscript c in formula (3), i.e., the lowercase letter c which is not C meaning a carbon atom bonded to $R_5$ and $R_6$, represents an integer of 1 to 3.

$R_1$ to $R_4$ in formula (2) above are preferably selected from a hydrogen atom, a substituted or unsubstituted alkyl group having 1 to 10 carbon atoms, and a substituted or unsubstituted aryl group having 6 to 20 carbon atoms, more preferably selected from a hydrogen atom, a substituted or unsubstituted alkyl group having 1 to 6 carbon atoms, and a substituted or unsubstituted aryl group having 6 to 12 carbon atoms, and even more preferably selected from a hydrogen atom, an alkyl group having 1 to 3 carbon atoms, and an aryl group having 6 to 8 carbon atoms.

Further, Z in formula (2) is preferably a group represented by general formula (3) above. In formula (3), $R_5$ and $R_6$ may be each independently a hydrogen atom, a substituted or unsubstituted alkyl group, or a substituted or unsubstituted aryl group. $R_5$ and $R_6$ are each independently preferably selected from a hydrogen atom, an alkyl group having 1 to 10 carbon atoms, and an aryl group having 6 to 20 carbon atoms, more preferably selected from a hydrogen atom, an alkyl group having 1 to 6 carbon atoms, and an aryl group having 6 to 12 carbon atoms, and even more preferably selected from a hydrogen atom, an alkyl group having 1 to 3 carbon atoms, and an aryl group having 6 to 8 carbon atoms. Further, in formula (3), $R_5$ and $R_6$ may be bonded to each other to form a substituted or unsubstituted carbocyclic ring or heterocyclic ring having 4 to 20 carbon atoms. In this case, $R_5$ and $R_6$ preferably form a substituted or unsubstituted carbocyclic ring having 6 to 16 carbon atoms, and more preferably form a substituted or unsubstituted carbocyclic ring having 8 to 12 carbon atoms.

In formula (3), c represents an integer of 1 to 3, preferably an integer of 1 or 2, and more preferably 1.

The second thermoplastic resin may be a copolymer including both the structural unit (B) and the structural unit (A), or may be a polymer having only the structural unit (B), such as a homopolymer. In the thermoplastic resin composition, a plurality of different types of second thermoplastic resins including the above-described structural unit (B) may be included as a mixture.

Examples of the substituents that may be included in the structural unit (B) of the above-described formula (2) include a halogen atom, a hydroxy group, a carboxy group, a cyano group, an amide group having 1 to 10 carbon atoms, an alkyl group having 1 to 10 carbon atoms, a cycloalkyl group having 5 to 10 carbon atoms, an alkoxy group having 1 to 10 carbon atoms, a cycloalkyloxy group having 5 to 10 carbon atoms, an alkyloxycarbonyl group having 2 to 10 carbon atoms, a cycloalkyloxycarbonyl group having 5 to 10 carbon atoms, an aryloxycarbonyl group having 7 to 15 carbon atoms, an alkylcarbonyloxy group having 2 to 10 carbon atoms, a cycloalkylcarbonyloxy group having 5 to 10 carbon atoms, an arylcarbonyloxy group having 7 to 15 carbon atoms, a hydroxyalkylcarbonyl group having 2 to 10 carbon atoms, and a glycidyloxycarbonyl group. Note that the carbon number regarding general formula (2) includes the carbon number of the substituents.

Preferred specific examples of the monomer that forms the structural unit (B) of formula (2) include those derived from bisphenol A, bisphenol AP, bisphenol AF, bisphenol B, bisphenol BP, bisphenol C, bis(4-hydroxyphenyl)-2,2-dichloroethylene, bisphenol E, bisphenol F, bisphenol G, bisphenol M, bisphenol S, bisphenol P, bisphenol PH, bisphenol TMC, bisphenol P-AP (4,4'-(1-phenylethylidene)bisphenol), bisphenol P-CDE (4,4'-cyclododecylidene bisphenol), bisphenol P-HTG (4,4'-(3,3,5-trimethylcyclohexylidene)bisphenol), bisphenol P-MIBK (4,4'-(1,3-dimethylbutylidene)bisphenol), bisphenol PEO-FL (bisphenoxyethanol fluorene), bisphenol P-3MZ (4-[1-(4-hydroxyphenyl)-3-methylcyclohexyl]phenol), bisphenol OC-FL (4,4'-[1-[4-[1-(4-hydroxyphenyl)-1-methylethyl]phenyl]ethylidene]bisphenol), bisphenol Z, BP-2EO (2,2'-[[1,1'-biphenyl]-4,4'-diylbis(oxy)bisethanol), S-BOC (4,4'-(1-methylethylidene)bis(2-methylphenol)), bisphenol OC-FL (4,4'-[1-[4-[1-(4-hydroxyphenyl)-1-methylethyl]phenyl]ethylidene]bisphenol), TrisP-HAP (4,4',4"-ethylidene trisphenol), or the like.

Among them, those derived from bisphenol A, bisphenol C, bisphenol TMC, or the like are included in more preferred specific examples of the structural unit (B).

The monomer compounds of formula (2) above may be used solely, or two or more of them may be used in combination to form the structural unit (B).

1-4. Another Thermoplastic Resin

The thermoplastic resin composition may include a thermoplastic resin other than the first thermoplastic resin and the second thermoplastic resin described above (another thermoplastic resin).

For example, the thermoplastic resin composition may include a thermoplastic resin having a structural unit (C) derived from a monomer represented by general formula (5) below.

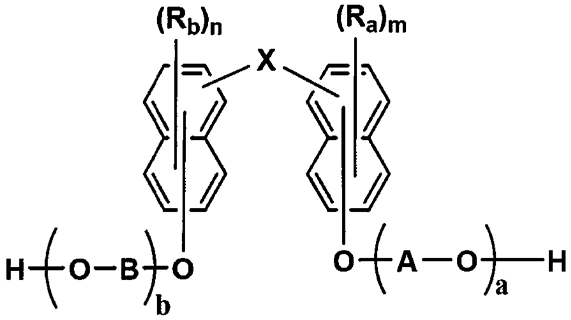

(5)

In general formula (5), $R_a$ and $R_b$ are each independently selected from a hydrogen atom; a halogen atom; a substituted or unsubstituted alkyl group having 1 to 20 carbon atoms; a substituted or unsubstituted alkoxyl group having 1 to 20 carbon atoms; a substituted or unsubstituted cycloalkyl group having 5 to 20 carbon atoms; a substituted or unsubstituted cycloalkoxyl group having 5 to 20 carbon atoms; a substituted or unsubstituted aryl group having 6 to 20 carbon atoms; a substituted or unsubstituted heteroaryl group having 6 to 20 carbon atoms or a substituted or unsubstituted aryloxy group having 6 to 20 carbon atoms, which contains at least one heterocyclic atom selected from O, N and S; and $-C\equiv C-R_h$.

Further, the above-described $R_h$ represents a substituted or unsubstituted aryl group having 6 to 20 carbon atoms, or a substituted or unsubstituted heteroaryl group having 6 to 20 carbon atoms which contains at least one heterocyclic atom selected from O, N and S.

$R_a$ and $R_b$ in general formula (5) are each independently preferably selected from a hydrogen atom, a substituted or unsubstituted alkyl group having 1 to 20 carbon atoms, a substituted or unsubstituted alkoxyl group having 1 to 20 carbon atoms, a substituted or unsubstituted cycloalkyl group having 5 to 20 carbon atoms, and a substituted or unsubstituted aryl group having 6 to 20 carbon atoms, and more preferably selected from a hydrogen atom, a substituted or unsubstituted alkyl group having 1 to 20 carbon atoms, and a substituted or unsubstituted aryl group having 6 to 20 carbon atoms. $R_a$ and $R_b$ are even more preferably selected from a hydrogen atom, and a substituted or unsubstituted aryl group having 6 to 20 carbon atoms.

In general formula (5), X is a single bond or a substituted or unsubstituted alkylene group having 3 or less carbon atoms, preferably a single bond or a substituted or unsubstituted alkylene group having 2 or less carbon atoms, more preferably a single bond or a substituted or unsubstituted alkylene group having 1 carbon atom, and particularly preferably a single bond.

In general formula (5), A and B each independently represent a substituted or unsubstituted alkylene group having 1 to 5 carbon atoms, preferably a substituted or unsubstituted alkylene group having 1 to 3 carbon atoms, and more preferably a substituted or unsubstituted alkylene group having 1 or 2 carbon atoms.

In general formula (5), m and n each independently represent an integer of 0 to 6, preferably an integer of 0 to 3, and more preferably 0 or 1.

In general formula (5), a and b each independently represent an integer of 0 to 10, preferably an integer of 0 to 5, more preferably an integer of 0 to 3, and particularly preferably 0 or 1.

Among the options for $R_a$ and $R_b$ in general formula (5), each of the substituted or unsubstituted alkyl group

having 1 to 20 carbon atoms and the substituted or unsubstituted alkoxyl group having 1 to 20 carbon atoms has a carbon number of preferably 1 to 10, more preferably 1 to 6, and even more preferably 1 to 3, or 1.

Among the options for $R_a$ and $R_b$ in general formula (5), each of the substituted or unsubstituted cycloalkyl group having 5 to 20 carbon atoms and the substituted or unsubstituted cycloalkoxyl group having 5 to 20 carbon atoms has a carbon number of preferably 5 to 10, more preferably 6 to 8, and even more preferably 6 or 7.

Among the options for $R_a$ and $R_b$ in general formula (5), each of the substituted or unsubstituted aryl group having 6 to 20 carbon atoms; and the substituted or unsubstituted heteroaryl group having 6 to 20 carbon atoms or the substituted or unsubstituted aryloxy group having 6 to 20 carbon atoms, which contains at least one heterocyclic atom selected from O, N and S, has a carbon number of preferably 6 to 12, more preferably 6 to 10, and even more preferably 6 to 8, or 6.

Examples of the substituents that may be included in the structural unit (C) of the above-described formula (5) include a halogen atom, a hydroxy group, a carboxy group, a cyano group, an amide group having 1 to 10 carbon atoms, an alkyl group having 1 to 10 carbon atoms, a cycloalkyl group having 5 to 10 carbon atoms, an alkoxy group having 1 to 10 carbon atoms, a cycloalkyloxy group having 5 to 10 carbon atoms, an alkyloxycarbonyl group having 2 to 10 carbon atoms, a cycloalkyloxycarbonyl group having 5 to 10 carbon atoms, an aryloxycarbonyl group having 7 to 15 carbon atoms, an alkylcarbonyloxy group having 2 to 10 carbon atoms, a cycloalkylcarbonyloxy group having 5 to 10 carbon atoms, an arylcarbonyloxy group having 7 to 15 carbon atoms, a hydroxyalkylcarbonyl group having 2 to 10 carbon atoms, and a glycidyloxycarbonyl group. Note that the carbon number regarding general formula (5) includes the carbon number of the substituents.

Preferred specific examples of the monomer that forms the structural unit (C) of formula (5) include 2,2'-bis(hydroxy(poly)alkoxy)-diaryl-1,1'-binaphthalenes and 2,2'-bis(hydroxy(poly)alkoxy)-dinaphthyl-1,1'-binaphthalenes. Among these monomer compounds, 2,2'-bis(2-hydroxyethoxy)-6,6'-diphenyl-1,1'-binaphthalene, 2,2'-bis(2-hydroxyethoxy)-6,6'-di(naphthalen-1-yl)-1,1'-binaphthalene, 2,2'-bis(2-hydroxymethoxy)-6,6'-diphenyl-1,1'-binaphthalene, 2,2'-bis(2-hydroxymethoxy)-6,6'-di(naphthalen-1-yl)-1,1'-binaphthalene, 2,2'-bis(2-hydroxypropoxy)-6,6'-diphenyl-1,1'-binaphthalene, and 2,2'-bis(2-hydroxypropoxy)-6,6'-di(naphthalen-1-yl)-1,1'-binaphthalene are preferred.

The monomer compounds of formula (5) above may be used solely, or two or more of them may be used in combination to form the structural unit (C).

Preferred specific examples of the monomer compounds of formula (5) include the following.

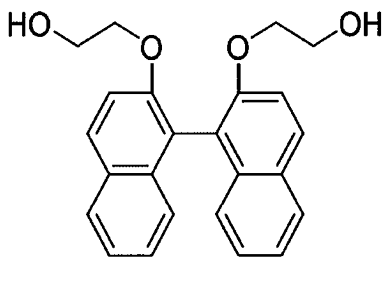

BNE

2,2'-bis(2-hydroxyethoxy)-1,1'-binaphthalene

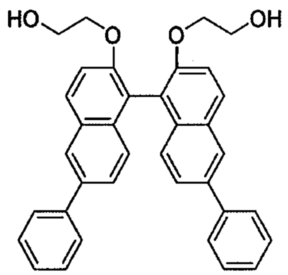

BINL-2EO or DPBHBNA

2,2'-bis(2-hydroxyethoxy)-6,6'-diphenyl-1,1'-binaphthalene

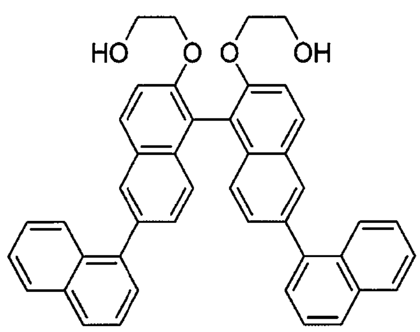

DNBINOL-2EO

2,2'-bis(2-hydroxyethoxy)-6,6'-di(naphthalen-1-yl)-1,1'-binaphthalene

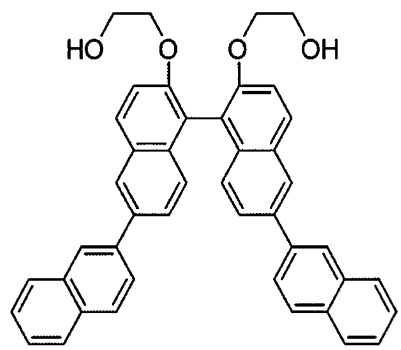

2DNBINOL-2EO

2,2'-bis(2-hydroxyethoxy)-6,6'-di(phenanthren-9-yl)-1,1'-binaphthalene

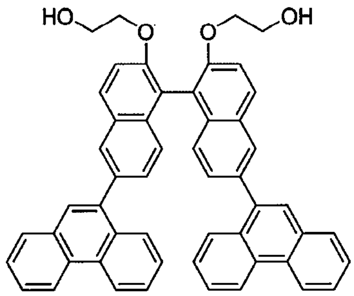

9DPNBINOL-2EO

2,2'-bis(2-hydroxyethoxy)-6,6'-di(phenanthren-9-yl)-1,1'-binaphthalene

Further, the thermoplastic resin composition may include a thermoplastic resin having a structural unit derived from a substituted or unsubstituted aliphatic diol.

Specific examples of the substituted or unsubstituted aliphatic diol include:

aliphatic diols such as ethylene glycol, 1,2-propylene glycol, 1,3-propanediol, 1,3-butanediol, 2-methyl-1,3-propanediol, 1,3-pentanediol, 2,4-pentanediol, 2-methyl-1,3-butanediol, neopentyl glycol, 1,3-hexanediol, 3-methyl-1,3-butanediol, 1,5-pentanediol, 2-methyl-1,5-pentanediol, 3-methyl-1,5-pentanediol, 1,5-hexanediol, 2-ethyl-1,5-pentanediol, 2-propyl-1,5-pentanediol, 2,2-diethyl-1,3-propanediol, 2-methyl-2-propyl-1,3-propanediol, 2-butyl-2-ethyl-1,3-propanediol, 2-methyl-1,2-propanediol, 1,4-butanediol, 1,6-hexanediol, 2,5-hexanediol, 1,9-nonanediol, 2-methyl-1,8-octanediol, diethylene glycol, triethylene glycol, m-xylylene glycol, p-xylylene glycol, polyethylene glycol, polypropylene glycol, and polybutylene glycol; and

alicyclic diols such as 1,3-cyclohexanediol, 1,4-cyclohexanediol, 1,3-bis(hydroxymethyl)cyclohexane, 1,4-bis(hydroxymethyl)cyclohexane, 1,3-cyclohexane dimethanol, 1,4-cyclohexane dimethanol, 1,2-decahydronaphthalene dimethanol, 1,3-decahydronaphthalene dimethanol, 1,4-decahydronaphthalene dimethanol, 1,5-decahydronaphthalene dimethanol, 1,6-decahydronaphthalene dimethanol, 2,7-decahydronaphthalene dimethanol, tetralin dimethanol, norbornane dimethanol, tricyclodecane dimethanol, 5-methylol-5-ethyl-2-(1,1-dimethyl-2-hydroxyethyl)-1,3-dioxane, pentacyclododecane dimethanol, and 3,9-bis(1,1-dimethyl-2-hydroxyethyl)-2,4,8,10-tetraoxaspiro[5.5]undecane (or (β,β,β',β'-tetramethyl-2,4,8,10-tetraoxaspiro[5,5]undecane-3,9-diethanol (SPG (spiroglycol))).

Examples of the substituents that may be included in the structural unit derived from the aliphatic diol include a halogen atom, a hydroxy group, a carboxy group, a cyano group, an amide group having 1 to 10 carbon atoms, an alkyl group having 1 to 10 carbon atoms, a cycloalkyl group having 5 to 10 carbon atoms, an alkoxy group having 1 to 10 carbon atoms, a cycloalkyloxy group having 5 to 10 carbon atoms, an alkyloxycarbonyl group having 2 to 10 carbon atoms, a cycloalkyloxycarbonyl group having 5 to 10 carbon atoms, an aryloxycarbonyl group having 7 to 15 carbon atoms, an alkylcarbonyloxy group having 2 to 10 carbon atoms, a cycloalkylcarbonyloxy group having 5 to 10 carbon atoms, an arylcarbonyloxy group having 7 to 15 carbon atoms, a hydroxyalkylcarbonyl group having 2 to 10 carbon atoms, and a glycidyloxycarbonyl group. Note that the carbon number of the structural unit derived from the aliphatic diol includes the carbon number of the substituents.

## 1-5. Secondary Component

The thermoplastic resin composition may include a component other than the thermoplastic resins. For example, at least one additive selected from a mold release agent, an antioxidant, etc. may be included. The thermoplastic resin composition preferably includes one or both of a mold release agent and an antioxidant.

In the thermoplastic resin composition, based on the total weight thereof, the content of a secondary component such as an additive other than the thermoplastic resins is preferably 20% by weight or less, more preferably 15% by weight or less or 10% by weight or less, even more preferably 7% by weight or less or 5% by weight or less, and particularly preferably 3% by weight or less or 2% by weight or less.

Specific examples of additives that may be included in the thermoplastic resin composition include the following.

Mold Release Agent

Examples of the mold release agent include a carboxylate ester, a polysiloxane compound, and a paraffin wax (polyolefin-based). Specific examples thereof include at least one type of compound selected from the group consisting of an aliphatic carboxylic acid, an ester of an aliphatic carboxylic acid and an alcohol, an aliphatic hydrocarbon compound with a number average molecular weight of 200 to 15000, and a polysiloxane-based silicone oil. Examples of the aliphatic carboxylic acid include a saturated or unsaturated aliphatic monovalent, divalent or trivalent carboxylic acid. In this regard, the aliphatic carboxylic acid also includes an alicyclic carboxylic acid. Among them, the aliphatic carboxylic acid is preferably a monovalent or divalent carboxylic acid having 6 to 36 carbon atoms, and more preferably an aliphatic saturated monovalent carboxylic acid having 6 to 36 carbon atoms. Specific examples of the aliphatic carboxylic acid include palmitic acid, stearic acid, valeric acid, caproic acid, capric acid, lauric acid, arachic acid, behenic acid, lignoceric acid, cerotic acid, melissic acid, tetratriacontanoic acid, montanic acid, glutaric acid, adipic acid, and azelaic acid. As the aliphatic carboxylic acid in the ester of the aliphatic carboxylic acid and the alcohol, the same aliphatic carboxylic acids as described above can be used. Meanwhile, examples of the alcohol include a saturated or unsaturated monohydric or polyhydric alcohol. Such alcohols may have a substituent such as a fluorine atom and an aryl group. Among them, a monohydric or polyhydric saturated alcohol having 30 or less carbon atoms is preferred, and an aliphatic saturated monohydric alcohol or polyhydric alcohol having 30 or less carbon atoms is more preferred. In this regard, the aliphatic compound also includes an alicyclic compound. Specific examples of the alcohol include octanol, decanol, dodecanol, stearyl alcohol, behenyl alcohol, ethylene glycol, diethylene glycol, glycerin, pentaerythritol, 2,2-dihydroxy perfluoropropanol, neopentylene glycol, ditrimethylolpropane, and dipentaerythritol.

The above-described ester compound may contain an aliphatic carboxylic acid and/or an alcohol as impurities, and may be a mixture of a plurality of compounds. Specific examples of the ester of the aliphatic carboxylic acid and the alcohol include beeswax (a mixture mainly composed of myricyl palmitate), stearyl stearate, behenyl behenate, stearyl behenate, glycerin monopalmitate, glycerin monostearate, glycerin distearate, glycerin tristearate, pentaerythritol monopalmitate, pentaerythritol monostearate, pentaerythritol distearate, pentaerythritol tristearate, and pentaerythritol tetrastearate. Examples of the aliphatic hydrocarbon with a number average molecular weight of 200 to 15000 include liquid paraffin, paraffin wax, microcrystalline wax, polyethylene wax, Fischer-Tropsch wax, and an $\alpha$-olefin oligomer having 3 to 12 carbon atoms. In this regard, the aliphatic hydrocarbon also includes an alicyclic hydrocarbon. Further, these hydrocarbon compounds may be partially oxidized. Among them, paraffin wax, polyethylene wax, and a partially oxidized product of polyethylene wax are preferred, and paraffin wax and polyethylene wax are more preferred. The number average molecular weight is preferably 200 to 5000. These aliphatic hydrocarbons may be a single substance or a mixture of those with various constituents or various molecular weights as long as the main component is within the above-described range. Examples of the polysiloxane-based silicone oil include dimethyl silicone oil, phenylmethyl silicone oil, diphenyl silicone oil, and fluorinated alkyl silicone. Two or more types of them may be used in combination.

The ratio of the mold release agent added is preferably 0.001 parts by mass or more, and more preferably 0.01 parts by mass or more, while preferably 2 parts by mass or less, and more preferably 1 parts by mass or less, relative to 100 parts by mass of the thermoplastic resin composition.

As the mold release agent, one type of mold release agent may be used solely, or two or more types of mold release agents may be used. When two or more types are used, the total amount thereof is preferably within the above-described range.

Antioxidant

Examples of the antioxidant include a phenol-based antioxidant, a hindered phenol-based antioxidant, a bisphenol-based antioxidant, and a polyphenol-based antioxidant.

Specific examples thereof include 2,6-di-tert-butyl-4-methylphenol, tris(3,5-di-tert-butyl-4-hydroxybenzyl)isocyanurate, n-octadecyl-3-(3',5'-di-tert-butyl-4'-hydroxyphenyl)propionate, tetrakis[methylene-3-(3,5-di-tert-butyl-4-hydroxyphenyl)propionate]methane, 4,4'-butylidene bis-(3-methyl-6-tert-butylphenol), triethylene glycol-bis[3-(3-tert-butyl-4-hydroxy-5-methylphenyl)propionate], 3,9-bis{2-[3-(3-tert-butyl-4-hydroxy-5-methylphenyl)propionyloxy]-1,1-dimethylethyl}-2,4,8,10-tetraoxaspiro[5,5]undecane, pentaerythritol tetrakis[3-(3,5-di-tert-butyl-4-hydroxyphenyl)propionate], thiodiethylene bis[3-(3,5-di-tert-butyl-4-hydroxyphenyl)propionate], N,N'-hexane-1,6-diyl bis[3-(3,5-di-tert-butyl-4-hydroxyphenyl propionamide)], 2,4-dimethyl-6-(1-methyl pentadecyl)phenol, diethyl[[3,5-bis(1,1-dimethylethyl)-4-hydroxyphenyl]methyl]phosphate, 3,3',3",5,5',5"-hexa-tert-butyl-a,a',a"-(mesitylene-2,4,6-triyl)tri-p-cresol, 4,6-bis(octylthiomethyl)-o-cresol, ethylene bis(oxyethylene) bis[3-(5-tert-butyl-4-hydroxy-m-tolyl)propionate], hexamethylene bis [3-(3,5-di-tert-butyl-4-hydroxyphenyl)propionate], 1,3,5-tris(3,5-di-tert-butyl-4-hydroxybenzyl)-1,3,5-triazine-2,4,6(1H,3H,5H)-trione, and 2,6-di-tert-butyl-4-(4,6-bis(octylthio)-1,3,5-triazine-2-ylamino)phenol.

Examples of the phenol-based antioxidant include "Irganox 1010" (registered trademark; the same applies to the following) and "Irganox 1076" manufactured by BASF, and "ADK STAB AO-50" and "ADK STAB AO-60" manufactured by

ADEKA Corporation.

The ratio of the antioxidant added is preferably 0.001 parts by mass or more, and more preferably 0.01 parts by mass or more, while preferably 1 parts by mass or less, and more preferably 0.5 parts by mass or less, relative to 100 parts by mass of the thermoplastic resin composition.

As the antioxidant, one type of antioxidant may be included solely, or two or more types of antioxidants may be included. When two or more types are included, the total amount thereof is preferably within the above-described range.

2. Method for Producing Thermoplastic Resin Composition

Hereinafter, the method for producing the thermoplastic resin composition will be described. Thermoplastic resins including the first and second thermoplastic resins can be produced by publicly-known manufacturing methods. For example, a thermoplastic resin can be produced by promoting a polymerization reaction in a reaction system including a monomer compound and a catalyst at a polymerization temperature of 200 to 250°C and a pressure of 760 mmHg to 200 mmHg. For example, a thermoplastic resin that is a polycarbonate resin can be produced by using monomer compounds represented by general formulae (1) to (3) above and a carbonate precursor such as a carbonic acid diester as raw materials and performing melt polycondensation in the presence of a basic compound catalyst or a transesterification catalyst or a mixed catalyst including both of them, or in the absence of a catalyst.

The method for producing the thermoplastic resin composition has at least a mixing step for mixing a plurality of types of thermoplastic resins. In the mixing step, preferably, different types of thermoplastic resins, the above-described secondary component, etc. are melt-kneaded, or these materials are respectively dissolved in a solvent and blended, followed by volatilizing the solvent. As the solvent, for example, a halogen-based organic solvent, THF or the like is suitably used. The thermoplastic resin composition can be produced by the manufacturing method including the above-described mixing step. Further, in the mixing step, additives may be mixed into the thermoplastic resins by a publicly-known technique.

3. Method for Adjusting Characteristics of Thermoplastic Resin Composition

The above-described mixing step can also be utilized as part of a method for adjusting characteristics of the thermoplastic resin composition. For example, by mixing the first and second thermoplastic resins having different values of parameters such as refractive index at a predetermined ratio, the values of characteristics of the resulting thermoplastic resin composition can be adjusted to predetermined levels.

4. Characteristics of Thermoplastic Resin Composition and Thermoplastic Resins

Preferred characteristics of the thermoplastic resin composition and thermoplastic resins are as described below.

4-1. Refractive Index

The value of the refractive index (nD) of the thermoplastic resin composition in accordance with JIS B 7071-2:2018 is 1.550 to 1.700, and can be suitably adjusted according to the application of the composition.

For example, for forming a lens unit using a plurality of lenses, thermoplastic resin compositions having refractive indexes in various ranges are desired. The preferred range of the refractive index (nD) of the thermoplastic resin composition is, for example, 1.570 to 1.650, 1.570 to 1.680, 1.580 to 1.670, 1.590 to 1.660, 1.600 to 1.650, 1.610 to 1.645, 1.620 to 1.640, 1.623 to 1.637, 1.625 to 1.635, 1.628 to 1.630, or 1.628 to 1.629.

Further, the preferred range of the refractive index (nD) of the thermoplastic resin composition may be 1.570 or more, 1.580 or more, 1.590 or more, 1.600 or more, 1.610 or more, 1.620 or more, 1.630 or more, 1.640 or more, 1.650 or more, 1.660 or more, 1.670 or more, 1.680 or more, or 1.690 or more.

The value of the refractive index (nD) of the first thermoplastic resin in accordance with JIS B 7071-2:2018 is 1.650 or less. Further, the value of the refractive index of the first thermoplastic resin is preferably greater than that of the second thermoplastic resin, and may be suitably adjusted according to, for example, the application of the thermoplastic resin composition in which the first thermoplastic resin is included.

For example, the preferred range of the refractive index (nD) of the first thermoplastic resin is 1.700 or less, 1.655 or less, 1.645 or less, 1.640 or less, 1.635 or less, 1.630 or less, 1.625 or less, 1.620 or less, 1.615 or less, 1.610 or less, 1.605 or less, 1.600 or less, or the like.

Further, the preferred range of the refractive index (nD) of the first thermoplastic resin may be 1.600 to 1.670, 1.610 to 1.665, 1.620 to 1.660, 1.625 to 1.655, 1.630 to 1.650, or 1.635 to 1.645.

The value of the refractive index (nD) of the second thermoplastic resin in accordance with JIS B 7071-2:2018 is

1.570 or more. Further, the value of the refractive index of the second thermoplastic resin is preferably smaller than that of the first thermoplastic resin, and may be suitably adjusted according to, for example, the application of the thermoplastic resin composition in which the second thermoplastic resin is included.

For example, the preferred range of the refractive index (nD) of the second thermoplastic resin is 1.560 or more, 1.565 or more, 1.575 or more, 1.580 or more, 1.585 or more, 1.590 or more, 1.595 or more, 1.600 or more, 1.605 or more, 1.610 or more, 1.615 or more, 1.620 or more, or the like.

Further, the preferred range of the refractive index (nD) of the second thermoplastic resin may be 1.560 to 1.630, 1.565 to 1.625, 1.570 to 1.620, 1.575 to 1.615, 1.580 to 1.610, or 1.585 to 1.605.

## 4-2. Total Light Transmittance (TT (%))

The total light transmittance (%) of the thermoplastic resin composition measured by the method which will be described later is preferably 60% or more, more preferably 70% or more, even more preferably 80% or more, and particularly preferably 85% or more.

## 4-3. YI value

The YI value of the thermoplastic resin composition measured by the method which will be described later is preferably 20 or less, more preferably 16 or less or 14 or less, even more preferably 12 or less, 10 or less, 9.0 or less, or 8.0 or less, and particularly preferably 7.0 or less, 6.0 or less, or 5.0 or less.

## 4-4. Haze

The haze value of the thermoplastic resin composition measured by the method which will be described later is preferably 2.0 or less or 1.6 or less, more preferably 1.2 or less or 1.0 or less, even more preferably 0.8 or less or 0.6 or less, and particularly preferably 0.4 or less or 0.3 or less.

## 4-5. Abbe Number (νd)

The value of the Abbe number (vd) of the thermoplastic resin composition measured by the method which will be described later is preferably 32 or less or 31 or less, more preferably 30 or less or 29 or less, even more preferably 28 or less or 26 or less, and particularly preferably 25 or less or 24.5 or less. Note that the value of the Abbe number (vd) of the thermoplastic resin composition can be suitably adjusted according to the application of the composition.

For example, the preferred range of the Abbe number (vd) of the thermoplastic resin composition for a certain application may be, for example, 20 to 32, 21 to 30, 22 to 28, or 23 to 26.

The value of the Abbe number (vd) of the first thermoplastic resin measured by the method which will be described later may be, for example, 20 to 28, 21 to 27, 22 to 26, or 23 to 25.

Further, the value of the Abbe number (vd) of the second thermoplastic resin measured by the method which will be described later may be, for example, 22 to 32, 23 to 31, 24 to 30, or 25 to 29.

## 4-6. Glass Transition Temperature (Tg)

The value of the glass transition temperature (Tg) of the thermoplastic resin composition in accordance with JIS K7121-1987 is preferably 100 to 200°C, more preferably 110 to 180°C, even more preferably 120 to 160°C, and particularly preferably 130 to 155°C.

## 4-7. Melt Volume Rate (MVR)

The value of MVR (unit: $cm^3$/10 min) of the thermoplastic resin composition in accordance with JIS K7210 is preferably 15 or more, more preferably 20 or more, even more preferably 25 or more, and particularly preferably 30 or more.

It can be said that a resin or resin composition with a high value of MVR has high flowability.

## 4-8. Weight Average Molecular Weight

The weight average molecular weight of the thermoplastic resins included in the thermoplastic resin composition is preferably 10,000 to 300,000, more preferably 10,000 to 200,000, even more preferably 10,000 to 100,000, for example, still more preferably 20,000 to 80,000, yet more preferably 30,000 to 70,000, and particularly preferably 40,000 to 65,000.

The weight average molecular weight of the thermoplastic resins is measured, for example, as the polystyrene-equivalent weight average molecular weight (Mw) as described below.

Using GPC (gel permeation chromatography) with chloroform as a developing solvent, a calibration curve is produced using a standard polystyrene having an already-known molecular weight (molecular weight distribution=1) (Shodex STANDARD, SM-105). The elution time and molecular weight value of each peak are plotted based on the measured standard polystyrene, and three-dimensional approximation is conducted to obtain a calibration curve.

Further, based on the obtained calibration curve, the weight average molecular weight (Mw) can be obtained as the polystyrene equivalent value using the below-described formula.

[Calculation formula]

$$Mw=\Sigma(W_i\times M_i)/\Sigma(W_i)$$

(In the above-described formula, "i" represents the "i"th dividing point when dividing the molecular weight M, "$W_i$" represents the "i"th weight, and "$M_i$" represents the "i"th molecular weight. The molecular weight M represents the polystyrene equivalent molecular weight at the corresponding elution time in the calibration curve.)

5. Molded Bodies Including Thermoplastic Resin Composition

The thermoplastic resin composition of the present invention can be used for extrusion molding, blow molding, injection molding, etc. Examples of products as molded bodies (molded articles) obtained by using the thermoplastic resin composition include extrusion molded articles, hollow molded articles, precision parts, and thin injection molded articles. Specific examples of molded articles obtained by using the thermoplastic resins of the present invention as optical materials include optical components such as optical lenses, various films such as optical films, liquid crystal displays, light guide plates, and optical disk substrates, and cases for electronic devices such as smartphones.

Hereinafter, the present invention will be specifically described by way of working examples, but the present invention is not limited thereto.

EXAMPLES

The methods for measuring the characteristics of the thermoplastic resins or thermoplastic resin compositions obtained in Examples and Comparative Examples are as described below.

(1) Total Light Transmittance (TT), YI, and Haze

The obtained resin was molded to have a thickness of 3 mm, and the total light transmittance (TT), YI, and the haze were measured using a spectroscopic haze meter. The total light transmittance (TT), YI, and the haze are values obtained in accordance with JIS K 7361-1:1997, JIS K 7373:2006, and JIS K-7136:2000, respectively.

Measurement apparatus: "SH 7000" manufactured by Nippon Denshoku Industries Co., Ltd.

(2) Refractive Index (nD)

Based on JIS B 7071-2:2018, a V-block having a predetermined shape was obtained by molding the obtained resin or resin composition and used as a test piece. The refractive index was measured at 23°C using a refractometer (KPR-3000 manufactured by Shimadzu Corporation).

(3) Abbe Number (vd)

Using the same test piece (V-block) as that used for the measurement of the refractive index, refractive indexes at wavelengths of 486 nm, 589 nm, and 656 nm were measured at 23°C using a refractometer, and the Abbe number was calculated using the below-described formula.

Refractometer: KPR-3000 manufactured by Shimadzu Corporation $v=(nD-1)/(nF-nC)$
nD: refractive index at a wavelength of 589 nm
nC: refractive index at a wavelength of 656 nm
nF: refractive index at a wavelength of 486 nm
Refractometer: KPR-3000 manufactured by Shimadzu Corporation

(4) Glass Transition Temperature (Tg)

Based on JIS K7121-1987, the measurement was carried out with a temperature raising program of 10°C/min using a differential scanning calorimeter.

Differential scanning calorimeter: X-DSC7000 manufactured by Hitachi High-Tech Science Corporation

(5) Melt Volume Rate (MVR)

The obtained resin or resin composition was vacuum dried at 120°C for 4 hours and the measurement was carried out in accordance with JIS K7210.

Measurement apparatus: Melt Indexer T-111 manufactured by Toyo Seiki Seisaku-sho, Ltd.
Measurement conditions: Measured at 260°C with a load of 2160 g
Operation: MVR (unit: $cm^3$/10 min) was calculated from the amount of resin extruded per 10 minutes from a standard die installed at the bottom of a cylinder.

MVR is an index that indicates the flowability of resin, and the higher the value, the higher the flowability of the resin or resin composition.

(Polymerization Example 1)

As raw materials, 6.06 kg (26.56 mol) of 2,2-bis(4'-hydroxyphenyl)propane (bisphenol A: BPA), 8.81 kg (20.08 mol) of 9,9-bis[4-(2-hydroxyethoxy)phenyl]fluorene (BPEF), 10.28 kg (48.00 mol) of DPC, and $2.41\times10^{-2}$ g ($2.86\times10^{4}$ mol) of sodium hydrogen carbonate were put into a 50 L reactor equipped with a stirrer and a distillation apparatus. After substitution with nitrogen in the reaction system was carried out, the temperature of the reaction system was increased to 205°C over 20 minutes under nitrogen atmosphere (760 Torr). After that, the raw materials were melted while the pressure was reduced to 700 Torr over 10 minutes.

The mixture was held in this state for 10 minutes, then stirred, and then held for 100 minutes, and after that, the pressure was reduced to 205 Torr over 20 minutes. After that, the pressure in the reaction system was adjusted to 180 Torr over 10 minutes, and it was held for 20 minutes under conditions of 215°C and 180 Torr. Further, the pressure in the reaction system was adjusted to 150 Torr over 10 minutes, and it was held for 30 minutes under conditions of 230°C and 150 Torr, and then the pressure was reduced to 120 Torr and the temperature was increased to 235°C. After that, the pressure in the reaction system was reduced to 100 Torr over 10 minutes, and it was held for 10 minutes. Further, the pressure in the reaction system was adjusted to 1 Torr or less over 50 minutes, and it was held for 40 minutes under conditions of 235°C and 1 Torr or less. After the reaction was completed, nitrogen was introduced into the reactor to increase the pressure, and a polycarbonate resin produced was taken out therefrom while being pelletized.

Relative to 100 parts by weight of the polycarbonate resin pellet taken out, 0.1 parts by weight of glycerin monostearate (manufactured by Riken Vitamin Co., Ltd.; RIKEMAL S - 100A) and 0.1 parts by weight of pentaerythritol tetrakis[3-(3,5-di-tert-butyl-4-hydroxyphenyl)propionate] (manufactured by ADEKA Corporation; ADK STAB AO - 60) as additives were compounded using a vent-type twin screw extruder (TEM-26SX manufactured by SHIBAURA MACHINE CO., LTD.; co-rotating) to obtain a polycarbonate resin mixed with the additives.

(Polymerization Example 2)

The operation was carried out in a manner similar to that in Polymerization Example 1, except that as raw materials, 1.38 kg (6.10 mol) of 2,2-bis(4'-hydroxyphenyl)propane (bisphenol A: BPA), 17.77 kg (40.53 mol) of 9,9-bis [4-(2-hydroxyethoxy)phenyl]fluorene (BPEF), 10.28 kg (48.00 mol) of DPC, and $2.41\times10^{-2}$ g ($2.86\times10^{-4}$ mol) of sodium hydrogen carbonate were used, and a polycarbonate resin was taken out while being pelletized.

Relative to 100 parts by weight of the polycarbonate resin pellet taken out, 0.1 parts by weight of glyceryl laurate (manufactured by Riken Vitamin Co., Ltd.; POEM M-300) and 0.1 parts by weight of pentaerythritol tetrakis[3-(3,5-di-tert-butyl-4-hydroxyphenyl)propionate] (manufactured by ADEKA Corporation; ADK STAB AO - 60) as additives were compounded using a vent-type twin screw extruder (TEM-26SX manufactured by SHIBAURA MACHINE CO., LTD.; co-rotating) to obtain a polycarbonate resin mixed with the additives.

(Polymerization Example 3)

A polycarbonate resin mixed with additives was obtained in a manner similar to that in Polymerization Example 1, except that as raw materials, 20.43 kg (46.59 mol) of 9,9-bis[4-(2-hydroxyethoxy)phenyl]fluorene (BPEF), 10.28 kg (48.00

mol) of DPC, and $2.41 \times 10^{-2}$ g ($2.86 \times 10^{-4}$ mol) of sodium hydrogen carbonate were used.

(Comparative Examples 1 to 3 (Waste Resin Recoveries 1 to 3))

Molding of optical lenses was carried out using each of the polycarbonate resins obtained in Polymerization Examples 1 to 3, sprues and runners of the obtained molded bodies (recycled products 1 to 3) were recovered, and the thermoplastic resins of the respective recovered products were used as Comparative Examples 1 to 3.

(Example 1)

31.19% by mass of the aforementioned recycled product 1, 68.81% by mass of the aforementioned recycled product 2, and as additives, 0.1 parts by weight of glycerin monostearate (manufactured by Riken Vitamin Co., Ltd.; RIKEMAL S - 100A) and 0.1 parts by weight of pentaerythritol tetrakis[3-(3,5-di-tert-butyl-4-hydroxyphenyl)propionate] (manufactured by ADEKA Corporation; ADK STAB AO - 60), were melt-mixed using an extruder to obtain a resin composition. The extruder used for melt-mixing was a vent-type twin screw extruder (TEM-26SX manufactured by SHIBAURA MACHINE CO., LTD.; co-rotating), and regarding extrusion conditions, the discharge rate was 15 kg/h, the screw rotation speed was 300 rpm, the vacuum degree of the vent was 3 kPa, and the extrusion temperatures from the first supply port to the die portion in order were 200, 220, 240, 260, 260, 260, 260, 260, 255, and 255°C.

The physical properties of the obtained composition are shown in Table 1 below.

(Examples 2 to 5)

A resin composition was obtained in a manner similar to that in Example 1, except that the materials were melt-mixed at a ratio shown in Table 1.

The physical properties of the obtained composition are shown in Table 1 below.

Table 1

| | | Example 1 | Example 2 | Example 3 | Example 4 | Example 5 | Comparative Example 1 (Recycled product 1) | Comparative Example 2 (Recycled product 2) | Comparative Example 3 (Recycled product 3) | Polymerization Example 1 (resin of Comparative Example 1 immediately after polymerization) | Polymerization Example 2 (resin of Comparative Example 2 immediately after polymerization) | Polymerization Example 3 (resin of Comparative Example 3 immediately after polymerization) |
|---|---|---|---|---|---|---|---|---|---|---|---|---|
| Mixing ratio | Resin obtained from Polymerization Example 1 (wt%) | 31.19 | 33.73 | 36.27 | 38.81 | 41.35 | 100.00 | 0.00 | 0.00 | 100.00 | 0.00 | 0.00 |
| | Resin obtained from Polymerization Example 2 (wt%) | 68.81 | 51.61 | 34.41 | 17.20 | 0.00 | 0.00 | 100.00 | 0.00 | 0.00 | 100.00 | 0.00 |
| | Resin obtained from Polymerization Example 3 (wt%) | 0.00 | 14.66 | 29.32 | 43.99 | 58.65 | 0.00 | 0.00 | 100.00 | 0.00 | 0.00 | 100.00 |
| Composition ratio | BPA (mol%) | 26.71 | 25.92 | 25.13 | 24.34 | 23.55 | 56.95 | 13.00 | 0.00 | 56.95 | 13.00 | 0.00 |
| | BPEF (mol%) | 73.29 | 74.08 | 74.87 | 75.66 | 76.45 | 43.05 | 87.00 | 100.00 | 43.05 | 87.00 | 100.00 |
| Physical properties | Total light transmittance (TT) (%) | 87.2 | 87.2 | 87.1 | 87.0 | 87.0 | 87.2 | 87.3 | 86.7 | 88.6 | 88.6 | 88.7 |
| | YI | 7.2 | 7.5 | 7.8 | 8.2 | 8.5 | 7.4 | 7.1 | 9.6 | 2.6 | 2.2 | 3.6 |
| | Haze | 0.42 | 0.44 | 0.55 | 0.59 | 0.62 | 0.43 | 0.39 | 0.79 | 0.15 | 0.11 | 0.17 |
| | Refractive index (nD) | 1.628 | 1.628 | 1.628 | 1.629 | 1.629 | 1.614 | 1.636 | 1.640 | 1.614 | 1.636 | 1.640 |
| | Abbe number (vd) | 24.5 | 24.5 | 24.5 | 24.5 | 24.4 | 25.9 | 23.9 | 23.5 | 25.9 | 23.9 | 23.5 |
| | Glass transition temperature (Tg) | 143 | 143 | 143 | 143 | 144 | 143 | 143 | 145 | 144 | 144 | 145 |
| | Melt volume rate (MVR) | 35 | 30 | 29 | 28 | 27 | 31 | 42 | 36 | 32 | 39 | 35 |

The molecular structures and abbreviations of the monomer compounds used in the above-described polymerization examples are as follows.

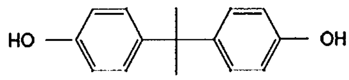

BPA

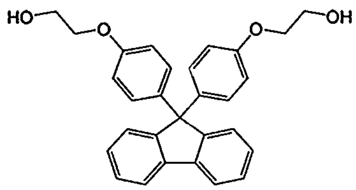

BPEF

(Polymerization Example 4)

9.30 kg (21.20 mol) of 9,9-bis[4-(2-hydroxyethoxy)phenyl]fluorene (BPEF), 3.05 kg (10.00) of SPG, 4.77 kg (15.37 mol) of 1,1-bis(4-hydroxyphenyl)-3,3,5-trimethylcyclohexane (Bis-TMC), 10.28 kg (48.00 mol) of DPC, and $2.41\times10^{-2}$ g ($2.86\times10^{-4}$ mol) of sodium hydrogen carbonate were put into a 50 L reactor equipped with a stirrer and a distillation apparatus. After substitution with nitrogen in the reaction system was carried out, the temperature of the reaction system was increased to 205°C over 20 minutes under nitrogen atmosphere (760 Torr). After that, the raw materials were melted while the pressure was reduced to 700 Torr over 10 minutes.

The mixture was held in this state for 10 minutes, then stirred, and then held for 100 minutes, and after that, the pressure was reduced to 205 Torr over 20 minutes. After that, the pressure in the reaction system was adjusted to 180 Torr over 10 minutes, and it was held for 20 minutes under conditions of 215°C and 180 Torr. Further, the pressure in the reaction system was adjusted to 150 Torr over 10 minutes, and it was held for 30 minutes under conditions of 230°C and 150 Torr, and then the pressure was reduced to 120 Torr and the temperature was increased to 235°C. After that, the pressure in the reaction system was reduced to 100 Torr over 10 minutes, and it was held for 10 minutes. Further, the pressure in the reaction system was adjusted to 1 Torr or less over 50 minutes, and it was held for 40 minutes under conditions of 235°C and 1 Torr or less. After the reaction was completed, nitrogen was introduced into the reactor to increase the pressure, and a polycarbonate resin produced was taken out therefrom while being pelletized.

Relative to 100 parts by weight of the polycarbonate resin pellet taken out, 0.2 parts by weight of glycerin monostearate (manufactured by Riken Vitamin Co., Ltd.; RIKEMAL S - 100A), 0.1 parts by weight of pentaerythritol tetrakis [3-(3,5-di-tert-butyl-4-hydroxyphenyl)propionate] (manufactured by ADEKA Corporation; ADK STAB AO - 60), and 0.03 parts by weight of 3,9-bis(2,6-di-tert-butyl-4-methylphenoxy)-2,4,8,10-tetraoxa-3,9-diphosphaspiro[5.5]undecane (manufactured by ADEKA Corporation; ADK STAB PEP-36) as additives were compounded using a vent-type twin screw extruder (TEM-26SX manufactured by SHIBAURA MACHINE CO., LTD.; co-rotating) to obtain a polycarbonate resin mixed with the additives.

(Comparative Example 4 (Waste Resin Recovery 4))

Molding of an optical lens was carried out using the polycarbonate resin obtained in Polymerization Example 4, sprues and runners of the obtained molded body (recycled product 4) were recovered, and the thermoplastic resin of the recovered product was used as Comparative Example 4.

(Example 6)

50.0% by mass of the aforementioned polycarbonate resin of Polymerization Example 4, 50.0% by mass of the aforementioned recycled product 4, and as additives, 0.1 parts by weight of glycerin monostearate (manufactured by Riken Vitamin Co., Ltd.; RIKEMAL S - 100A) and 0.1 parts by weight of pentaerythritol tetrakis[3-(3,5-di-tert-butyl-4-hydroxyphenyl)propionate] (manufactured by ADEKA Corporation; ADK STAB AO - 60), were melt-mixed using an extruder to obtain a resin composition. The extruder used for melt-mixing was a vent-type twin screw extruder (TEM-26SX manufactured by SHIBAURA MACHINE CO., LTD.; co-rotating), and regarding extrusion conditions, the discharge rate was 15 kg/h, the screw rotation speed was 300 rpm, the vacuum degree of the vent was 3 kPa, and the extrusion temperatures from the first supply port to the die portion in order were 200, 220, 240, 260, 260, 260, 260, 260, 255, and 255°C.

The physical properties of the obtained composition are shown in Table 2 below.

Table 2

| | | Example 6 | Comparative Example 4 (Recycled product 4) | Polymerization Example 4 (resin of Comparative Example 4 immediately after polymerization) |
|---|---|---|---|---|
| Mixing ratio | Resin obtained from Polymerization Example 4 (wt%) | 50.00 | 0.00 | 100.00 |
| | Resin obtained from recycled product 4 (wt%) | 50.00 | 100.00 | 0.00 |
| Composition ratio | BPEF (mol%) | 45.50 | 45.50 | 45.50 |
| | BisP-TMC (mol%) | 33.00 | 33.00 | 33.00 |
| | SPG (mol%) | 21.50 | 21.50 | 21.50 |
| Physical properties | Total light transmittance (TT) (%) | 88.9 | 88.4 | 89.8 |
| | YI | 4.4 | 6.7 | 2.6 |
| | Haze | 0.23 | 0.33 | 0.12 |
| | Refractive index (nD) | 1.586 | 1.586 | 1.586 |
| | Abbe number (vd) | 28.5 | 28.5 | 28.5 |
| | Glass transition temperature (Tg) | 146 | 146 | 147 |
| | Melt volume rate (MVR) | 35 | 36 | 33 |

The molecular structures and abbreviations of the monomer compounds used in the above-described polymerization example are as follows.

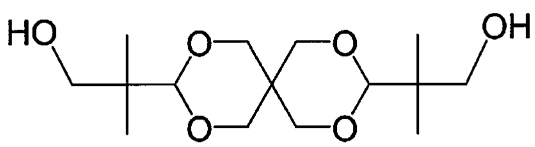

SPG

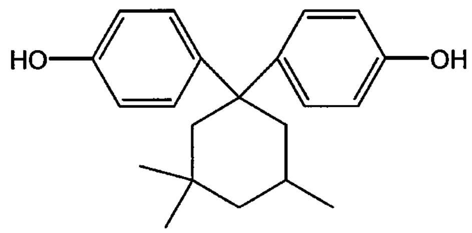

Bis−TMC

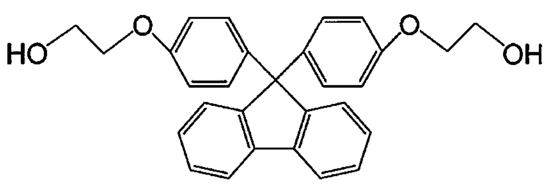

BPEF

As is clear from the results of the above-described Examples and Comparative Examples, it was confirmed that a thermoplastic resin composition having desired characteristics can be produced by mixing two or more of the thermoplastic resins of Comparative Examples 1 and 2 (copolymers) and Comparative Example 3 (homopolymer). For example, it is understood that the thermoplastic resin compositions of Examples 1 to 5, in which the refractive index is adjusted to be within a narrow range of 1.628 to 1.629, which is different from the refractive index values of the above-described copolymers and homopolymer, can be realized by various mixing ratios between the copolymers and homopolymer.

Further, other characteristics such as YI, haze, and MVR were also successfully adjusted by the ratio for mixing the copolymers and homopolymer of the Comparative Examples, though the differences are not so large as that of the refractive index. In particular, regarding the thermoplastic resin composition of Example 6, which is a mixture of new and recycled products of the same type of resin, it was confirmed that recycled products can be utilized while adjusting the values of YI, haze, and MVR by the mixing ratio.

Further, as illustrated in the above-described Examples, in the method for producing the thermoplastic resin composition of the present invention, a plurality of different types of thermoplastic resins are mixed, and therefore, for example, scrap pieces of thermoplastic resins that are generated when injected into gaps of molds such as sprues, runners, gates, etc. can be easily and effectively recycled. Accordingly, the thermoplastic resin composition of the present invention can be produced by a simple method including recycling, and can reliably achieve desired characteristics particularly in optical applications.

## Claims

1. A method for producing a thermoplastic resin composition, the method comprising at least a mixing step for mixing

   a first thermoplastic resin that comprises a structural unit (A) derived from a monomer represented by any one of general formulae (1a) to (1c), and
   a second thermoplastic resin that comprises a structural unit (B) derived from a monomer represented by general formula (2), wherein
   the refractive index of the first thermoplastic resin is 1.650 or less,
   the refractive index of the second thermoplastic resin is 1.570 or more, and
   the refractive index of the thermoplastic resin composition is 1.550 to 1.700:

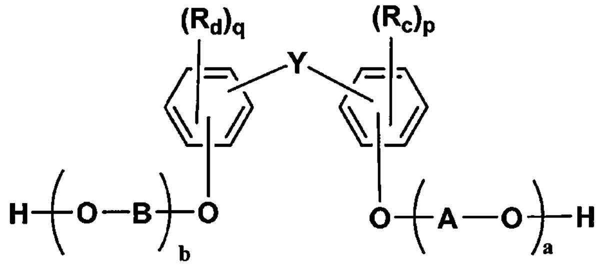

(1a)

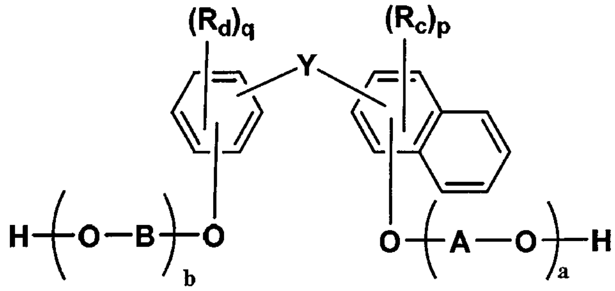

(1b)

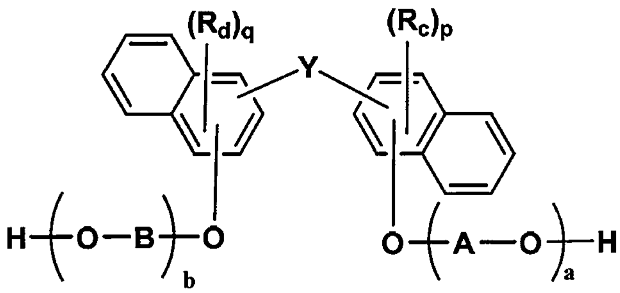

(1c)

   wherein in general formulae (1a) to (1c):

$R_c$ and $R_d$ are each independently selected from the group consisting of a hydrogen atom, a halogen atom, a substituted or unsubstituted alkyl group having 1 to 20 carbon atoms, a substituted or unsubstituted alkoxyl group having 1 to 20 carbon atoms, a substituted or unsubstituted cycloalkyl group having 5 to 20 carbon atoms, a substituted or unsubstituted cycloalkoxyl group having 5 to 20 carbon atoms, and a substituted or unsubstituted aryl group having 6 to 20 carbon atoms;
each Y independently represents any one of a single bond, a substituted or unsubstituted fluorene group, and structural formulae represented by formulae (i) to (vii):

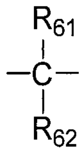

(i)

$-S-$

(ii)

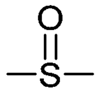

(iii)

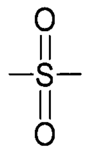

(iv)

$-(CH_2)_r-$

(v)

$-O-$

(vi)

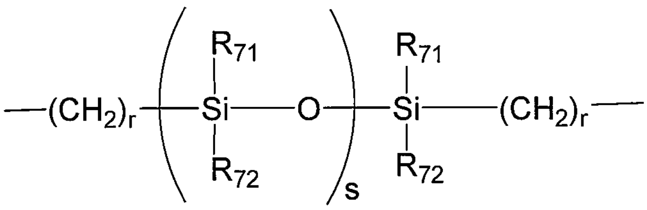

(vii)

wherein in formulae (i) to (vii):

$R_{61}$, $R_{62}$, $R_{71}$ and $R_{72}$ each independently represent a hydrogen atom, a halogen atom, a substituted or unsubstituted alkyl group having 1 to 20 carbon atoms, or a substituted or unsubstituted aryl group having 6 to 30 carbon atoms, or represent a substituted or unsubstituted carbocyclic ring or heterocyclic ring having 4 to 20 carbon atoms, wherein $R_{61}$ and $R_{62}$, or $R_{71}$ and $R_{72}$, are bonded to each other, and
r and s each independently represent an integer of 0 to 5000;
A and B each independently represent a substituted or unsubstituted alkylene group having 1 to 5 carbon atoms;
p and q each independently represent an integer of 0 to 4; and
a and b each independently represent an integer of 0 to 10,

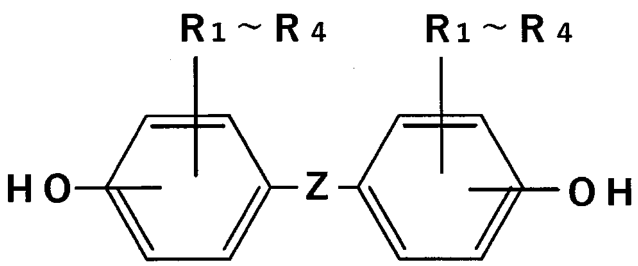

(2)

wherein in formula (2), $R_1$ to $R_4$ each independently represent a hydrogen atom, a substituted or unsubstituted alkyl group, or a substituted or unsubstituted aryl group; and Z represents a single bond or a group represented by general formula (3):

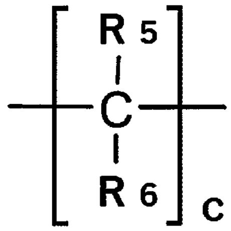

(3)

wherein in formula (3), $R_5$ and $R_6$ each independently represent a hydrogen atom, a substituted or unsubstituted alkyl group, or a substituted or unsubstituted aryl group, or represent a substituted or unsubstituted carbocyclic ring or heterocyclic ring having 4 to 20 carbon atoms, wherein $R_5$ and $R_6$ are bonded to each other, and c represents an integer of 1 to 3.

**2.** The thermoplastic resin composition production method according to claim 1, wherein at least one of the first thermoplastic resin and the second thermoplastic resin comprises a recycled thermoplastic resin.

**3.** The thermoplastic resin composition production method according to claim 1, wherein the refractive index of the thermoplastic resin composition is 1.570 to 1.650.

**4.** The thermoplastic resin composition production method according to claim 1, wherein the content of the structural unit (A) is 20 to 95 mol% and the content of the structural unit (B) is 5 to 80 mol% based on the total number of structural units of the first thermoplastic resin and the second thermoplastic resin.

**5.** The thermoplastic resin composition production method according to claim 1, wherein at least one of the first thermoplastic resin and the second thermoplastic resin is a copolymer having both the structural unit (A) and the structural unit (B).

**6.** The thermoplastic resin composition production method according to claim 1, wherein the first thermoplastic resin has only the structural unit (A).

**7.** The thermoplastic resin composition production method according to claim 1, wherein in the mixing step, an additive is mixed with the first thermoplastic resin and the second thermoplastic resin.

**8.** A thermoplastic resin composition comprising a mixture of

a first thermoplastic resin that comprises a structural unit (A) derived from a monomer represented by any one of general formulae (1a) to (1c), and
a second thermoplastic resin that comprises a structural unit (B) derived from a monomer represented by general formula (2), wherein
the refractive index of the first thermoplastic resin is 1.650 or less,
the refractive index of the second thermoplastic resin is 1.570 or more, and
the refractive index of the thermoplastic resin composition is 1.550 to 1.700:

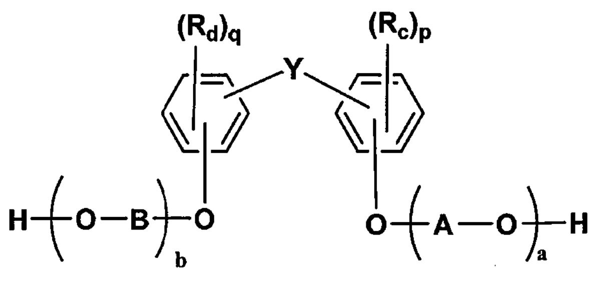

(1 a)

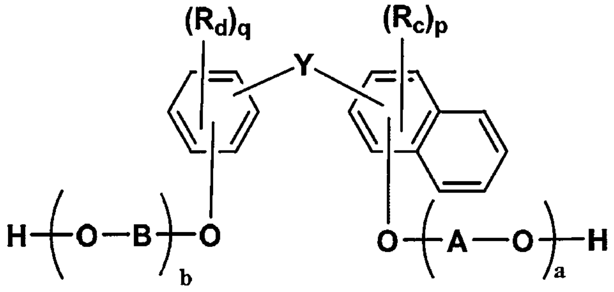

(1 b)

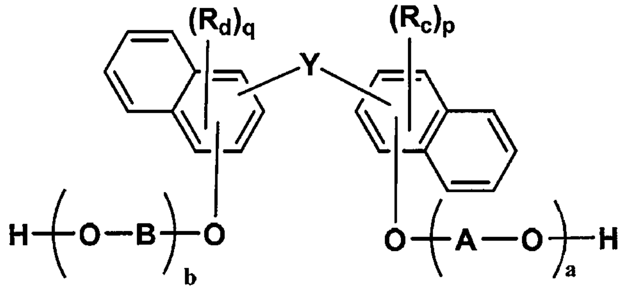

(1 c)

wherein in general formulae (1a) to (1c):

$R_c$ and $R_d$ are each independently selected from the group consisting of a hydrogen atom, a halogen atom, a substituted or unsubstituted alkyl group having 1 to 20 carbon atoms, a substituted or unsubstituted alkoxyl group having 1 to 20 carbon atoms, a substituted or unsubstituted cycloalkyl group having 5 to 20 carbon atoms, a substituted or unsubstituted cycloalkoxyl group having 5 to 20 carbon atoms, and a substituted or unsubstituted aryl group having 6 to 20 carbon atoms;

each Y independently represents any one of a single bond, a substituted or unsubstituted fluorene group, and structural formulae represented by formulae (i) to (vii):

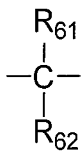

(i)

$-S-$

(ii)

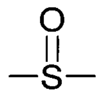

(iii)

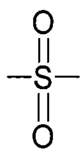

(iv)

$-(CH_2)_r-$

(v)

$-O-$

(vi)

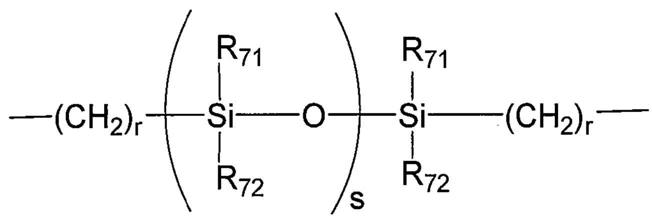

(vii)

wherein in formulae (i) to (vii):

$R_{61}$, $R_{62}$, $R_{71}$ and $R_{72}$ each independently represent a hydrogen atom, a halogen atom, a substituted or unsubstituted alkyl group having 1 to 20 carbon atoms, or a substituted or unsubstituted aryl group having 6 to 30 carbon atoms, or represent a substituted or unsubstituted carbocyclic ring or heterocyclic ring having 4 to 20 carbon atoms, wherein $R_{61}$ and $R_{62}$, or $R_{71}$ and $R_{72}$, are bonded to each other, and

r and s each independently represent an integer of 0 to 5000;

A and B each independently represent a substituted or unsubstituted alkylene group having 1 to 5 carbon atoms;

p and q each independently represent an integer of 0 to 4; and
a and b each independently represent an integer of 0 to 10,

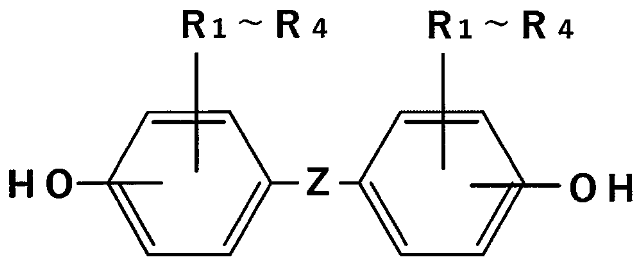

(2)

wherein in formula (2), $R_1$ to $R_4$ each independently represent a hydrogen atom, a substituted or unsubstituted alkyl group, or a substituted or unsubstituted aryl group; and Z represents a single bond or a group represented by general formula (3):

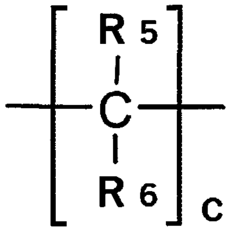

(3)

wherein in formula (3), $R_5$ and $R_6$ each independently represent a hydrogen atom, a substituted or unsubstituted alkyl group, or a substituted or unsubstituted aryl group, or represent a substituted or unsubstituted carbocyclic ring or heterocyclic ring having 4 to 20 carbon atoms, wherein $R_5$ and $R_6$ are bonded to each other, and
c represents an integer of 1 to 3.

**9.** The thermoplastic resin composition according to claim 8, wherein the thermoplastic resins comprise a mold release agent and/or an antioxidant.

**10.** An optical lens comprising the thermoplastic resin composition according to claim 8 or 9.

## INTERNATIONAL SEARCH REPORT

International application No.
**PCT/JP2024/017657**

**A. CLASSIFICATION OF SUBJECT MATTER**

***C08L 69/00***(2006.01)i
FI: C08L69/00

According to International Patent Classification (IPC) or to both national classification and IPC

**B. FIELDS SEARCHED**

Minimum documentation searched (classification system followed by classification symbols)

C08L69/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2022-28757 A (MITSUBISHI GAS CHEMICAL COMPANY, INC.) 16 February 2022 (2022-02-16) claims, paragraphs [0009], [0025], examples | 1-10 |
| X | JP 2021-1310 A (MITSUBISHI GAS CHEMICAL COMPANY, INC.) 07 January 2021 (2021-01-07) claims, paragraphs [0001], [0003], [0035], examples | 1-10 |
| A | JP 2016-79333 A (IDEMITSU KOSAN CO., LTD.) 16 May 2016 (2016-05-16) paragraph [0002] | 1-10 |
| A | JP 2001-342247 A (MITSUBISHI GAS CHEMICAL COMPANY, INC.) 11 December 2001 (2001-12-11) paragraphs [0007], [0056] | 1-10 |
| A | WO 2022/230471 A1 (MITSUBISHI GAS CHEMICAL COMPANY, INC.) 03 November 2022 (2022-11-03) paragraph [0066] | 1-10 |

☐ Further documents are listed in the continuation of Box C.  ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **11 July 2024** | **30 July 2024** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (July 2022)

**INTERNATIONAL SEARCH REPORT**
**Information on patent family members**

International application No.
**PCT/JP2024/017657**

| Patent document cited in search report | Publication date (day/month/year) | Patent family member(s) | Publication date (day/month/year) |
|---|---|---|---|
| JP 2022-28757 A | 16 February 2022 | US 2019/0276596 A1<br>claims, paragraphs [0013], [0032], examples<br>WO 2017/203852 A1<br>EP 3467030 A1<br>TW 201815959 A<br>CN 109153845 A<br>KR 10-2019-0013722 A | |
| JP 2021-1310 A | 07 January 2021 | (Family: none) | |
| JP 2016-79333 A | 16 May 2016 | US 2017/0306088 A1<br>paragraph [0002]<br>WO 2016/063656 A1<br>EP 3211037 A1<br>TW 201617406 A<br>KR 10-2017-0074879 A<br>CN 107075241 A | |
| JP 2001-342247 A | 11 December 2001 | US 2001/0039313 A1<br>paragraph [0007]<br>EP 1138714 A2<br>TW 572933 B | |
| WO 2022/230471 A1 | 03 November 2022 | EP 4332172 A1<br>paragraph [0101]<br>CN 117222708 A<br>KR 10-2024-0001309 A<br>TW 202302705 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2014073496 A
- WO 2015166951 A